(19) Europäisches Patentamt
European Patent Office
Office européen des brevets

(11) **EP 2 223 728 B1**

(12) **EUROPEAN PATENT SPECIFICATION**

(45) Date of publication and mention
of the grant of the patent:
**30.03.2011 Bulletin 2011/13**

(51) Int Cl.:
***B01D 46/24*** *(2006.01)*

(21) Application number: **09178826.5**

(22) Date of filing: **11.12.2009**

(54) **Sealing material for honeycomb structured body, honeycomb structured body, and method for manufacturing honeycomb structured body**

Dichtungsmaterial für Wabenstrukturkörper, Wabenstrukturkörper und Verfahren zur Herstellung eines Wabenstrukturkörpers

Matériau d'étanchéité pour corps structuré en nid d'abeille, corps structuré en nid d'abeille et son procédé de fabrication

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.02.2009 PCT/JP2009/052233**

(43) Date of publication of application:
**01.09.2010 Bulletin 2010/35**

(73) Proprietor: **Ibiden Co., Ltd.**
**Gifu 503-8604 (JP)**

(72) Inventor: **Kanai, Masanori**
**Gifu 501-0695 (JP)**

(74) Representative: **HOFFMANN EITLE**
**Patent- und Rechtsanwälte**
**Arabellastraße 4**
**81925 München (DE)**

(56) References cited:
**EP-A- 1 997 789      WO-A-2007/143437**
**US-A- 5 290 522**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a sealing material for a honeycomb structured body, a honeycomb structured body, and a method for manufacturing a honeycomb structured body.

BACKGROUND ART

Inorganic fibers have been used as materials for various constituent members in a honeycomb structured body used as a filter for removing particulates and the like from exhaust gases discharged from an internal combustion engine such as a diesel engine or as a catalyst supporting carrier for converting toxic components such as HC (hydrocarbon) and CO (carbon monoxide) from exhaust gases, or in an exhaust gas purification apparatus using the honeycomb structured body.

Specifically, there have been used sealing material containing inorganic fibers, such as a sealing material (adhesive) for combining a plurality of honeycomb fired bodies to form a ceramic block and a sealing material (also referred to as peripheral sealing material or peripheral coating material) to be applied on the periphery of the ceramic block.

In the case where such inorganic fibers are taken into human body, especially in the lung, and remain there for a long time, the inorganic fibers might be harmful to human body. Therefore, it is desired that the inorganic fibers used in the sealing material are highly safe for human body.

Patent Document 1 has disclosed a sealing material containing, as inorganic fibers, at least one compound selected from the group consisting of an alkali metal compound, an alkaline earth metal compound and a boron compound.

The inorganic fibers containing the compound described in Patent Document 1 are so-called biosoluble fibers. The biosoluble fibers are soluble in physiological saline solution. Therefore, if taken into human body, the biosoluble fibers are dissolved and discharged out of the body, and this is why they are considered to be highly safe for human body.

    Patent Document 1: WO05/110578 A1

The document EP-A-1977789 discloses bio-soluble fibers in a sealing material for honeycomb filters.

DISCLOSURE OF THE INVENTION

PROBLEMS TO BE SOLVED BY THE INVENTION

The sealing material disclosed in Patent Document 1 is prepared as a paste-like mixture by mixing an inorganic binder, an organic binder, inorganic particles, water, and the like in addition to the foregoing inorganic fibers. A predetermined sealing material layer (peripheral sealing material layer or adhesive layer) can be formed by applying the sealing material on a ceramic block or a honeycomb fired body.

However, when a sealing material prepared using the biosoluble fibers as inorganic fibers and an oxide sol as an inorganic binder is stored, aggregation or gelation occurs in the paste-like sealing material along with the lapse of time. As a result, the viscosity of the sealing material increases, thereby reducing the flowability.

When a phenomenon such as aggregation or gelation occurs in the sealing material, application of the sealing material to the ceramic block or the like problematically becomes difficult, which has negative effects on the processability.

Moreover, gelation of the sealing material makes it difficult to uniformly apply the sealing material on the ceramic block and the like. As a result, variations tend to occur in the thickness of the applied sealing material, which causes variations in the final strength of the peripheral sealing material layer and the like.

The present inventor has studied the causes of the aggregation or gelation of the sealing material. As a result, he has found that, as the pH value of the sealing material paste increases, gelation of the sealing material becomes more likely to occur due to gelation of the inorganic particles and/or the oxide gel contained in the sealing material.

Although detailed mechanisms of the gelation of the sealing material have not been known, the mechanisms may be as follows.

That is, normally, electrical double layers are formed on the surfaces of the inorganic particles and the oxide sol (oxide in the oxide sol) contained in the sealing material. The electrical double layers are thought to allow the inorganic particles and the oxide sol (oxide in the oxide sol) to stably exist dispersed.

However, when the pH value of the sealing material paste increases to, for example, more than 6, polyvalent metal ions such as $Ca^{2+}$ (calcium ion), and $Mg^{2+}$ (magnesium ion) contained in the biosoluble fibers elute and interfere with the surface charge of the inorganic particles and/or the oxide sol. Due to the interference, the charge balance on the surface of the inorganic particles and/or the oxide sol is disturbed so that the inorganic particles and/or the oxide sol may aggregate, presumably causing gelation of the sealing material.

The term "gelation" used herein refers to a phenomenon of viscosity increase due to aggregation, assembly, or phase change of solid components dispersed in a sol, which is caused by changes in the pH, presence of a polyvalent metal ion, and may cause increase of the viscosity of the sealing material paste.

As a result of the intensive studies based on the above findings, the present inventor has found that gelation of the sealing material can be prevented from occurring by using a sealing material paste that has been adjusted to be acidic upon preparation of the sealing material.

Although the mechanism is not clearly known, adjusting the sealing material paste to be acidic can prevent the polyvalent metal ions from eluting from the biosoluble fibers, and thus gelation of the sealing material may be prevented from occurring.

Examples of a method of adjusting a sealing material paste to be acidic include a method of using an acidic oxide sol, a method of mixing an alkali oxide sol and an acidic solution and the like.

In the case where the sealing material paste is acidic, it is possible to prevent gelation of the sealing material. However, there is still a problem that when the acidic sealing material is solidified, the strength of the solidified sealing material is smaller than the strength of the sealing material which is solidified prior to acidification. For example, when the aforementioned sealing material is used as a peripheral sealing material, the peripheral sealing material layer to be formed has a low strength. For this reason, damages such as cracks tend to occur in the peripheral sealing material layer during production or use of the honeycomb structured body. As a result, problems may occur such as leakage of a catalyst-containing solution during catalyst addition in the production of the honeycomb structured body, or leakage of exhaust gases in an exhaust gas purifying apparatus using the honeycomb structured body. Further, when the sealing material is used as an adhesive for an aggregated honeycomb structured body, the adhesive layer to be formed has a low strength. For this reason, the honeycomb fired bodies may slide or, in extreme cases, may come off in an exhaust gas purifying apparatus using the honeycomb structured body.

The present invention has been devised to solve the foregoing problems. An object of the present invention is to provide a sealing material for a honeycomb structured body, which contains well-biosoluble inorganic fibers, has good applicability to the ceramic block and the like even long after the preparation of the sealing material paste, and can prevent strength reduction after being solidified.

Other objects of the present invention are to provide a honeycomb structured body produced by using the aforementioned sealing material for a honeycomb structured body, and to provide a method for producing the aforementioned honeycomb structured body.

MEANS FOR SOLVING THE PROBLEMS

In order to solve the aforementioned problems, the inventor of the present invention has intensively examined causes of the reduction in the strength of the acidic sealing material after being solidified. The inventor has speculated that the polyvalent metal ions eluted in the sealing material, which are considered to cause gelation of the sealing material, have some influences on maintenance (improvement) of the strength of the solidified sealing material. After further studies based on this idea, the inventor of the present invention has reached to the following conclusion. Namely, when the sealing material is acidic, elution of the polyvalent metal ions is prevented as mentioned earlier. As a result, the amount of the polyvalent metal ions in the sealing material becomes low or the polyvalent metal ions do not exist in the sealing material, thereby reducing the strength of the solidified sealing material.

Based on the foregoing study results, the present inventor has found that, when gelation of the sealing material is prevented by adjusting the sealing material to be acidic and also a predetermined polyvalent metal ion is added to the sealing material, the strength of the solidified sealing material can be prevented from decreasing, and thereby completed the present invention.

The mechanism of preventing gelation of the sealing material and the mechanism of preventing reduction in the strength of the solidified acidic sealing material mentioned earlier may be other mechanisms as long as the same effects due to the configuration of the present invention can be achieved, and thus should not be interpreted limitedly.

The sealing material for a honeycomb structured body described in claim 1 includes inorganic fibers containing a biosoluble inorganic compound; an oxide sol; inorganic particles; and a metal-containing material that contains at least one member selected from the group consisting of Mg (magnesium), Ca (calcium), and Sr (strontium), and the sealing material is acidic.

The inorganic fibers included in the sealing material for a honeycomb structured body described in claim 1 contain a biosoluble inorganic compound. Therefore, even if the inorganic fibers are taken into a human body, as they are soluble under physiological conditions, safety for human body of the sealing material for a honeycomb structured body containing the inorganic fibers can be secured.

Hereinafter, the inorganic fibers containing a biosoluble inorganic compound are also referred to as "biosoluble fibers" in this description.

Since the sealing material for a honeycomb structured body described in claim 1 is acidic, elution of a polyvalent metal ion from the biosoluble fibers can be suppressed, thereby making it possible to prevent gelation of the sealing material.

Accordingly, even long after the preparation of the sealing material paste, it is possible to prevent decrease in the flowability of the sealing material paste caused by increase in the viscosity of the sealing material paste.

Further, the sealing material for a honeycomb structured body described in claim 1 includes a metal-containing material that contains at least one member selected from the group consisting of Mg, Ca, and Sr.

It is thus possible to supply the sealing material with the polyvalent metal ion that is necessary for maintaining (improving) the strength of the sealing material even when elution of the polyvalent metal ion is suppressed due to the sealing material being acidic. Therefore, the strength of the solidified sealing material can be prevented from decreasing.

In the sealing material for a honeycomb structured body described in claim 2, the inorganic compound is at least one of an alkali metal compound and an alkaline earth metal compound. Inclusion of the inorganic compound improves the biosolubility of the inorganic fibers.

In the sealing material for a honeycomb structured body described in claim 3, the metal-containing material is at least one member selected from the group consisting of calcium carbonate, calcium acetate, magnesium carbonate, magnesium nitrate, magnesium sulfate, and magnesium acetate. Those metal-containing materials are preferable because they can not only readily supply the polyvalent metal ion that is necessary for maintaining (improving) the strength of the sealing material due to their easy ionization in the sealing material paste but they can be readily obtained as well.

The metal-containing material may be calcium carbonate or calcium acetate as the sealing material for a honeycomb structured body described in claim 4. Since those calcium-containing materials are more easily ionized in the sealing material paste, they can readily supply the polyvalent metal ion that is necessary for maintaining (improving) the strength of the sealing material. Therefore, the calcium-containing materials can prevent a reduction in the strength of the solidified sealing material for a honeycomb structured body.

When the calcium content in the sealing material for a honeycomb structured body is 0.01% to 1.0% by weight as the sealing material for a honeycomb structured body described in claim 5, it is possible to favorably prevent a reduction in the strength of the solidified sealing material for a honeycomb structured body.

The calcium content of less than 0.01% by weight in the sealing material for a honeycomb structured body may not sufficiently achieve the effects of maintaining or improving the strength of the solidified sealing material. The calcium content of more than 1.0% by weight in the sealing material for a honeycomb structured body reduces the relative amounts of other components such as inorganic fibers, an oxide sol and inorganic particles in the sealing material for a honeycomb structured body. As a result, the strength of the solidified sealing material for a honeycomb structured body as a whole may be reduced.

The honeycomb structured body described in claim 6 includes a ceramic block which includes a honeycomb fired body in which a large number of cells are longitudinally placed in parallel with one another with a cell wall interposed therebetween; and a peripheral sealing material layer formed on a peripheral surface of the ceramic block. The peripheral sealing material layer is formed by solidifying the sealing material for a honeycomb structured body described in any one of claims 1 to 5.

The honeycomb structured body described in claim 6 contains biosoluble fibers as one of the materials forming the peripheral sealing material layer. For this reason, the honeycomb structured body is highly safe for human body and can be safely handled by users such as operators and consumers. Moreover, gelation of the sealing material for a honeycomb structured body does not occur in manufacturing of the honeycomb structured body described in claim 6. Therefore, it is possible to prevent uneven thickness of the peripheral sealing material layer caused by difficulty in evenly applying the sealing material in forming the peripheral sealing material layer. Accordingly, it is possible to prevent variation or reduction in the strength caused by uneven thickness of the peripheral sealing material layer.

Furthermore, in the honeycomb structured body described in claim 6, the peripheral sealing material layer is formed by solidifying the sealing material for a honeycomb structured body described in any one of claims 1 to 5. Therefore, the polyvalent metal ion necessary for maintaining (improving) the strength of the sealing material can be supplied in the sealing material, which prevents a reduction in the strength of the peripheral sealing material layer. As a result, damages such as cracks can be prevented from occurring in the peripheral sealing material layer during manufacturing or use of the honeycomb structured body. Therefore, it is possible, for example, to prevent problems such as leakage of the solution containing the catalyst in the catalyst addition in manufacturing of the honeycomb structured body, or leakage of exhaust gases from an exhaust gas-purifying apparatus using the honeycomb structured body.

The honeycomb structured body described in claim 7 contains a ceramic block which includes a plurality of honeycomb fired bodies; and an adhesive layer formed between side surfaces of a plurality of the honeycomb fired bodies. The honeycomb structured body of the present invention may be an integral honeycomb structured body in which the ceramic block includes a single honeycomb fired body, or may be an aggregated honeycomb structured body in which the ceramic block includes a plurality of the honeycomb fired bodies.

The adhesive layer may be formed of a solidified adhesive as the honeycomb structured body described in claim 8.

In the honeycomb structured body described in claim 9, the adhesive is the sealing material for a honeycomb structured body described in any one of claim 1 to 5.

In a honeycomb structured body in which a plurality of the honeycomb fired bodies are aggregated, adhesive layers are necessary between the honeycomb fired bodies, leading inevitably to increase in the total amount of the inorganic fibers contained in the honeycomb structured body. In the case of a conventional honeycomb structured body, as the amount of the adhesive layers increases, the inorganic fibers are more likely to be taken into human body. On the other hand, in the case of the honeycomb structured body described in claim 9, since the adhesive is the sealing material for a honeycomb structured body described in any one of claims 1 to 5, it is possible to secure the safety of human body even when the total amount of the inorganic fibers contained in the honeycomb structured body as a whole increases.

Moreover, in the honeycomb structured body described in claim 9, the sealing material for a honeycomb structured body described in any one of claims 1 to 5 is used as an adhesive. Therefore, it is possible to supply the adhesive (sealing material) with the polyvalent metal ion that is necessary for maintaining (improving) the strength of the adhesive (sealing material). Accordingly, the strength of the adhesive layer can be prevented from decreasing. As a result, it is possible, for example, to prevent problems such as sliding or in extreme cases coming off of the honeycomb fired body in an exhaust gas purifying apparatus which uses the honeycomb structured body.

The method for manufacturing a honeycomb structured body described in claim 10 is a method for manufacturing a honeycomb structured body including a ceramic block which includes a honeycomb fired body in which a large number of cells are longitudinally placed in parallel with one another with a cell wall interposed therebetween; and a peripheral sealing material layer formed on a peripheral surface of the ceramic block, the method including: preparing a sealing material for a honeycomb structured body containing inorganic fibers including a biosoluble inorganic compound, an oxide sol, inorganic particles, and a metal-containing material that contains at least one member selected from the group consisting of Mg, Ca, and Sr, the sealing material for a honeycomb structured body being acidic; and forming the peripheral sealing material layer by forming a peripheral sealing material paste layer including the sealing material for a honeycomb structured body on a peripheral surface of the ceramic block and solidifying the peripheral sealing material paste layer.

In the method for manufacturing a honeycomb structured body described in claim 10, since the sealing material for a honeycomb structured body, which is prepared in preparing the sealing material for a honeycomb structured body, is acidic, it is possible to prevent elution of the polyvalent metal ions from the biosoluble fiber, and thus gelation of the sealing material can be avoided. Accordingly, it is possible to prevent decrease in the flowability of the sealing material paste caused by increase in the viscosity of the sealing material paste even long after the preparation of the sealing material paste. Moreover, as the flowability of the sealing material for a honeycomb structured body can be kept at a high level, it is easy to manage the use and the like of the sealing material. Further, it is possible to avoid reduction of the processability in forming the peripheral sealing material paste on the peripheral surface of the ceramic block in forming the peripheral sealing material layer.

According to the method for manufacturing a honeycomb structured body described in claim 10, a peripheral sealing material layer which contains inorganic fibers including a biosoluble inorganic compound can be formed. Therefore, it is possible to manufacture a honeycomb structured body which is highly safe for human body. Moreover, use of the biosoluble fiber allows operators to safely work in preparing the sealing material for a honeycomb structured body and forming a peripheral sealing material layer.

Further, the sealing material for a honeycomb structured body prepared in preparing the sealing material for a honeycomb structured body contains a metal-containing material including at least one member selected from the group consisting of Mg, Ca, and Sr.

It is thus possible to supply the sealing material with the polyvalent metal ion that is necessary for maintaining (improving) the strength of the sealing material even when elution of the polyvalent metal ion is suppressed due to the sealing material being acidic. Therefore, the strength of the solidified sealing material can be prevented from decreasing. As a result, it is possible to prevent damages such as cracks from occurring in the peripheral sealing material layer.

The method for manufacturing a honeycomb structured body described in claim 11 further includes bonding for constructing the ceramic block, the ceramic block containing a plurality of the honeycomb fired bodies which are bonded with one another with an adhesive layer interposed therebetween, the bonding of a plurality of the honeycomb fired bodies including: preparing a honeycomb aggregated body in which a plurality of the honeycomb fired bodies are bonded with one another with an adhesive layer paste interposed therebetween; and solidifying the adhesive layer paste to form the adhesive layer.

By including this bonding, it is possible to manufacture an aggregated honeycomb structured body formed by bonding a plurality of the honeycomb fired bodies.

In the method for manufacturing a honeycomb structured body described in claim 12, the foregoing sealing material for a honeycomb structured body is used as the adhesive layer paste.

Since the adhesive layer paste (sealing material) for a honeycomb structured body is acidic, it is possible to prevent elution of the polyvalent metal ions from the biosoluble fiber, and thus gelation of the adhesive layer paste (sealing material) can be avoided. Accordingly, it is possible to prevent decrease in the flowability of the adhesive layer paste (sealing material paste) caused by increase in the viscosity of the adhesive layer paste (sealing material paste) even long after the preparation of the adhesive layer paste (sealing material paste). Moreover, as the flowability of the adhesive layer paste (sealing material) for a honeycomb structured body can be kept at a high level, it is easy to manage the use and the like of the adhesive layer paste (sealing material). Further, it is possible to avoid reduction of the processability in bonding a plurality of the honeycomb fired bodies by interposing the adhesive layer paste (sealing material for the honeycomb structured body).

According to the method for manufacturing a honeycomb structured body described in claim 12, an adhesive layer which contains the inorganic fibers including a biosoluble inorganic compound can be formed. Accordingly, it is possible to manufacture a honeycomb structured body which is highly safe for human body. Moreover, use of the biosoluble fibers allows operators to safely work in the bonding of a plurality of the honeycomb fired bodies.

Furthermore, the sealing material for a honeycomb structured body contains a metal-containing material including at least one member selected from the group consisting of Mg, Ca, and Sr.

It is thus possible to supply the sealing material with the polyvalent metal ion that is necessary for maintaining (improving) the strength of the sealing material even when elution of the polyvalent metal ion is suppressed due to the sealing material being acidic. Therefore, the strength of the solidified sealing material can be prevented from decreasing, enabling solid fixation of the honeycomb fired bodies. Accordingly, it is possible to manufacture a honeycomb structured body which can be stably used for a long period of time.

In the method for manufacturing a honeycomb structured body described in claim 13, the inorganic compound is at least one of an alkali metal compound and an alkaline earth metal compound. Use of the inorganic compound allows the inorganic fibers to act specifically as biosoluble fibers. As a result, it is possible to enhance the safety of the sealing material for a honeycomb structured body or ultimately the honeycomb structured body including the sealing material for human body.

In the method for manufacturing a honeycomb structured body described in claim 14, the metal-containing material is at least one member selected from the group consisting of calcium carbonate, calcium acetate, magnesium carbonate, magnesium nitrate, magnesium sulfate, and magnesium acetate.

The foregoing metal-containing materials are very easily available and can be readily handled. Therefore, preparation for production can be facilitated and processability during the manufacturing of the honeycomb structured body can be improved. Moreover, since the foregoing metal-containing materials are easily ionized in the sealing material paste, they can readily supply the polyvalent metal ion that is necessary for maintaining (improving) the strength of the sealing material for a honeycomb structured body. Therefore, the metal-containing materials can prevent a reduction in the strength of the solidified sealing material for a honeycomb structured body.

In the method for manufacturing a honeycomb structured body described in claim 15, the metal-containing material is calcium carbonate or calcium acetate.

Since the foregoing calcium-containing materials are more easily ionized in the sealing material paste, they can readily supply the polyvalent metal ion that is necessary for maintaining (improving) the strength of the sealing material for a honeycomb structured body. Therefore, the calcium-containing materials can prevent a reduction in the strength of the solidified sealing material for a honeycomb structured body.

When the calcium content in the sealing material for a honeycomb structured body is 0.01% to 1.0% by weight as in the method for manufacturing a honeycomb structured body described in claim 16, reduction in the strength of the solidified sealing material for a honeycomb structured body can be favorably prevented.

In the case where the calcium content in the sealing material for a honeycomb structured body is less than 0.01% by weight, the effect of maintaining or improving the strength of the solidified sealing material may not be sufficiently achieved, and thus the strength of the peripheral sealing material layer or the adhesive layer may be reduced. In the case where the calcium content in the sealing material for a honeycomb structured body exceeds 1.0% by weight, the relative amounts of other components, such as inorganic fibers, an oxide sol, and inorganic particles, in the sealing material for a honeycomb structured body are reduced. As a result, the strength of the solidified sealing material for a honeycomb structured body as a whole may be reduced, resulting in lower strength of the peripheral sealing material layer or the adhesive layer.

BEST MODE FOR CARRYING OUT THE INVENTION

(First Embodiment)

The following description will discuss embodiments of the sealing material for a honeycomb structured body,

the honeycomb structured body, and the method for manufacturing the honeycomb structured body of the present invention with reference to drawings.

First, the sealing material for a honeycomb structured body according to the present embodiment will be discussed below.

The sealing material for a honeycomb structured body of the present embodiment includes inorganic fibers containing a biosoluble inorganic compound; an oxide sol; inorganic particles; and a metal-containing material that contains at least one member selected from the group consisting of Mg, Ca, and Sr, and the sealing material is acidic.

In order to evaluate the biosolubility of the inorganic fibers containing an inorganic compound, the solubility of the inorganic compound contained in the inorganic fibers in physiological saline is measured by the following method.

The inorganic fibers in an amount of 0.5 g are added in 25 ml of physiological saline. The resulting product is shaken for five hours at a temperature of 37°C and then filtrated to remove solid content of the inorganic fibers. The extracted solution in which a portion of the inorganic fibers is dissolved is analyzed by atomic absorption spectrometry to measure the elements in the inorganic fibers such as silicon, sodium, calcium, and magnesium in the extracted solution. The physiological saline may be a commonly used one. When the total amount of the target compounds dissolved in the extracted solution is 100 ppm (0.01% by weight) or more, the inorganic fibers can be determined as inorganic fibers including biosoluble inorganic compounds. The ratio of the eluted material having been eluted from the inorganic fibers can be calculated based on the result of the measurement. In the case where the physiological saline originally contains the element to be measured, the amount of the element in the physiological saline is previously confirmed so that the amount is subtracted from the measured amount of the element in the sample.

It is desirable that the solubility of the inorganic fibers contained in the sealing material for a honeycomb structured body of the present embodiment in physiological saline at 37°C is 300 ppm (0.03% by weight) or more. The inorganic fibers having a solubility of 300 ppm (0.03% by weight) or more is immediately dissolved under physiological conditions, making it possible to further reduce risks caused upon taking of the inorganic fibers in a human body.

The inorganic compound in the inorganic fibers contained in the sealing material for a honeycomb structured body of the present embodiment is at least one of an alkali metal compound and an alkaline earth metal compound. Examples of the alkali metal compound include sodium oxides or salts, and potassium oxides or salts. Examples of the alkaline earth metal compound include magnesium oxides or salts, calcium oxides or salts, and barium oxides or salts. Biosoluble fibers can be obtained by allowing the materials of inorganic fibers such as silica, alumina, silica alumina, or glass to contain sodium oxides or salts, potassium oxides or salts, magnesium oxides or salts, calcium oxides or salts, barium oxides or salts, or boron oxides or salts.

The inorganic fibers included in the sealing material for a honeycomb structured body of the present embodiment preferably contain silica in an amount of 60% to 85% by weight, or more preferably 70% to 80% by weight, in addition to the foregoing inorganic compound. The silica refers to $SiO$ or $SiO_2$. The silica content of less than 60% by weight may reduce the strength of the inorganic fibers. The silica content exceeding 85% by weight may cause a reduction in the biosolubility due to the reduced amount of the inorganic compound in the inorganic fibers.

The inorganic fibers included in the sealing material for a honeycomb structured body of the present embodiment preferably contain at least one of a biosoluble alkali metal compound and a biosoluble alkaline earth metal compound. The inorganic fibers preferably contain 70% by weight or more of $SiO_2$. Generally, many of alkali metal silicates and alkaline earth metal silicates are biosoluble. However, the $SiO_2$ content of more than 85% by weight is not preferable as the amount of the alkali metal compound or the alkaline earth metal compound, which has biosolubility, becomes too small.

Moreover, the $Al_2O_3$ content of the inorganic fibers included in the sealing material for a honeycomb structured body of the present embodiment is preferably 2% by weight or less. The $Al_2O_3$ content may be 0% by weight as long as the content is 2% by weight or less, on the ground that generally an alkali metal aluminate or an alkali metal aluminosilicate and an alkaline earth metal aluminate or an alkaline earth metal aluminosilicate have no or little biosolubility.

Inorganic fibers are an inorganic material with a large aspect ratio (major axis/minor axis). Generally, inorganic fibers are especially effective for improving the elasticity of sealing materials.

The aspect ratio of the inorganic fibers included in the sealing material for a honeycomb structured body of the present embodiment is preferably 2 to 1000, more preferably 5 to 800, and further more preferably 10 to 500. When the aspect ratio of the inorganic fibers is less than 2, the inorganic fibers may not contribute to improving the elasticity of the sealing material. When the aspect ratio of the inorganic fibers is more than 1000, the bonding strength to bond the honeycomb fired bodies may be reduced. In the case where there is a distribution in the aspect ratio, the aspect ratio is expressed as an average value.

The lower limit of the amount of the inorganic fibers contained in the sealing material for a honeycomb structured body of the present embodiment is preferably 10% by weight and more preferably 20% by weight as a solid content. The upper limit of the amount of the inorganic fibers is preferably 70% by weight, more preferably 40% by weight, and further more preferably 30% by weight as a solid content. The inorganic fiber content of less than 10% by weight as a solid content may cause a reduction in the elasticity of the sealing material due to the reduced content of the inorganic fibers contributing to the elasticity. The inorganic fiber content of more than 70% by weight as a solid content may induce a reduction in the thermal conductivity and a reduction in the bonding strength of the sealing material due to the reduced content of the inorganic particles contributing to the thermal conductivity.

Moreover, the lower limit of the average fiber length of the inorganic fibers included in the sealing material for a honeycomb structured body of the present embodiment is preferably 0.1 μm. The upper limit of the average fiber length of the aforementioned inorganic fibers is preferably 1000 μm, more preferably 100 μm, and further more preferably 50 μm.

The average fiber length of less than 0.1 μm may reduce the elasticity of the sealing material. The average fiber length exceeding 1000 μm tends to make the inorganic fibers form a pill-like shape. As a result, it may become difficult to reduce the thickness of the adhesive layer or the peripheral sealing material layer, or the dispersibility of the inorganic particles in the sealing material may be deteriorated.

The oxide sol contained in the sealing material for a honeycomb structured body mainly functions as a binder to bond particles together after solidification of the sealing material. Examples of the oxide sol include silica sol, alumina sol, zirconia sol and the like. These may be used alone, or two or more kinds of these may be used in combination. Silica sol or alumina sol is preferably used among these.

The lower limit of the amount of the oxide sol contained in the sealing material for a honeycomb structured body is preferably 1% by weight, and more preferably 5% by weight as a solid content. The upper limit thereof is preferably 30% by weight, more preferably 15% by weight, and further more preferably 9% by weight as a solid content. The amount of the oxide sol of less than 1% by weight as a solid content may cause a reduction in the bonding strength due to the reduced content of the oxide sol functioning as a binder. The amount of the oxide sol exceeding 30% by weight as a solid content may cause a reduction in the thermal conductivity of the sealing material due to reduced content of the inorganic particles contributing to the thermal conductivity.

The average particle diameter of the oxide included in the oxide sol in the sealing material for a honeycomb structured body is preferably 5 to 30 nm.

The smaller the average particle diameter of the oxide contained in the oxide sol is, the more the bonding strength to bond the honeycomb fired bodies tends to improve. However, when the average particle diameter of the oxide is less than 5 nm, the dispersibility of the oxide in the sealing material tends to be deteriorated. Further, the oxide having the average particle diameter of less than 5 nm is difficult to manufacture and thus is hardly available. When the average particle diameter of the oxide exceeds 30 nm, the bonding sites among particles tend to be decreased to cause a reduction in the bonding strength to bond the honeycomb fired bodies.

In this description, the average particle diameter of the oxide contained in the oxide sol is measured, for example, by using the following method.

When the oxide sol is a silica sol, first, the silica sol is dried, and its BET specific surface area is measured.

Thereafter, supposing that silica particles in the silica sol are spherical particles of a dense body, the particle diameter is calculated from the following formula (1):

$$\text{BET specific surface area} = (6000/\rho)/\text{particle diameter} \quad \dots (1)$$

(in the formula, "$\rho$" is the true density of silica (2.2 g/cm$^3$))

Examples of the inorganic particles contained in the sealing material for a honeycomb structured body may include carbide particles, nitride particles and the like, and specific examples thereof may include inorganic powders, whiskers and the like, which are made of silicon carbide, silicon nitride, boron nitride and the like. Each of these may be used alone, or two or more kinds of these may be used in combination. Silicon carbide particles, which are superior in thermal conductivity, are more preferably used among the inorganic particles.

It should be noted that, although whiskers may be categorized as inorganic fibers, whiskers are included in the inorganic particles in the present description.

The lower limit of the amount of the inorganic particles contained in the sealing material for a honeycomb structured body is preferably 3% by weight, more preferably 10% by weight, and further more preferably 20% by weight. The upper limit of the amount of the inorganic particles is preferably 80% by weight, more preferably 60% by weight, and further more preferably 40% by weight. The amount of the inorganic particles of less than 3% by weight may cause a reduction in the thermal conductivity of the sealing material due to the reduced content of the inorganic particles. In the case where the amount of the inorganic particles exceeds 80% by weight, when exposure of the adhesive layer or the peripheral sealing material layer to high temperatures causes expansion of the inorganic particles with a high coefficient of thermal expansion, small cracks may occur near the expansion site. As a result, the bonding strength of the sealing material as a whole may be reduced.

The lower limit of the average particle diameter of the inorganic particles contained in the sealing material for

a honeycomb structured body is preferably 0.01 $\mu$m, and more preferably 0.1 $\mu$m. The upper limit of the average particle diameter of the inorganic particles is preferably 100 $\mu$m, more preferably 15 $\mu$m, and further more preferably 10 $\mu$m. The average particle diameter of the inorganic particles of less than 0.01 $\mu$m may reduce the dispersibility of the inorganic particles in the sealing material and may also increase the cost. The average particle diameter of the inorganic particles exceeding 100 $\mu$m may induce a reduction in the bonding strength or the thermal conductivity of the sealing material.

Examples of the metal-containing material contained in the sealing material for a honeycomb structured body according to the present embodiment may include salts, complexes or the like containing a metal which is easily ionized under acidic conditions, such as Mg, Ca, or Sr. These may be used alone, or two or more kinds of these may be used in combination. Examples of the salts containing Mg, Ca, or Sr include a carbonate, a nitrate, a sulfate, a phosphate, an acetate, a citrate, an oxalate or the like of Mg, Ca or Sr. Examples of the complexes containing Mg, Ca, or Sr include: an inorganic complex containing a carbonate ion, a sulfate ion, a phosphate ion or the like as an inorganic ligand; and an organic complex containing dicarboxylic acids, diamines, or the derivatives thereof as an organic ligands.
Calcium carbonate, calcium acetate, magnesium carbonate, magnesium nitrate, magnesium sulfate or magnesium acetate is preferable, and calcium carbonate or calcium acetate is more preferable among the above metal-containing materials. Those metal-containing materials are easily ionized in the sealing material paste. Accordingly, the metal-containing materials can easily provide polyvalent metal ions which are necessary for maintaining (improving) the strength of the sealing material for a honeycomb structured body and thus can prevent a reduction in the strength of the solidified sealing material for a honeycomb structured body. Those metal-containing materials are also desirable for the easy availability.

When the sealing material for a honeycomb structured body of the present embodiment includes the metal-containing material, the polyvalent ion that is necessary for maintaining (improving) the strength of the sealing material for a honeycomb structured body can be supplied in the sealing material. Therefore, the strength of the solidified sealing material can be prevented from decreasing.

In the case where the metal-containing material included in the sealing material for a honeycomb structured body of the present embodiment is calcium carbonate or calcium acetate, the lower limit of the calcium content contained in the sealing material for a honeycomb structured body is preferably 0.01% by weight and more preferably 0.1% by weight. The upper limit of the calcium content is preferably 1.0% by weight and more preferably 0.5% by weight.
When the calcium content is less than 0.01% by weight, the effect to maintain or improve the strength of the solidified sealing material may not be sufficiently achieved. When the calcium content exceeds 1.0% by weight, the relative amounts of the other components which are the inorganic fibers, the oxide sol, and the inorganic particles in the sealing material for a honeycomb structured body become small. As a result, the strength of the solidified sealing material for a honeycomb structured body as a whole may be reduced.

The sealing material for a honeycomb structured body of the present embodiment preferably includes an organic binder. Examples of the organic binder include polyvinyl alcohol, methylcellulose, ethylcellulose, carboxymethylcellulose and the like. These may be used alone, or two or more kinds of these may be used in combination. Carboxymethylcellulose is preferably used among the organic binders because it is excellent in the control of the viscosity of the sealing material.

The lower limit of the amount of the organic binder included in the sealing material for a honeycomb structured body of the present embodiment is preferably 0.1% by weight, more preferably 0.2% by weight, and further more preferably 0.4% by weight as a solid content. The upper limit of the amount of the organic binder contained in the sealing material for a honeycomb structured body is preferably 5.0% by weight, more preferably 1.0% by weight, and further more preferably 0.6% by weight as a solid content. In the case of the solid content of the organic binder of less than 0.1% by weight, the sealing material hardly turns into a paste due to the low viscosity of the sealing material, and thus application of the sealing material may become difficult. The solid content of the organic binder of more than 5.0% by weight may result in a sealing material having excessively high viscosity, and thus application of the sealing material may become difficult. Moreover, when the adhesive layer or the peripheral sealing material layer is exposed to high temperatures, the organic components in the sealing material evaporate. As a result, the parts where the organic components have evaporated in the sealing material may form cavities. Further, when the solid content of the organic binder exceeds 5.0% by weight, the ratio of content of the organic components contained in the sealing material for a honeycomb structured body is too high. As a result, the portion of the cavities formed upon evaporation of the organic components in the sealing material increases, possibly causing a reduction in the strength of the adhesive layer or the peripheral sealing material.

The preferable components constituting the sealing material for a honeycomb structured body of the present embodiments and the respective amounts are: 30% to 40% by weight of inorganic fibers containing $SiO_2$, MgO, CaO, and $Al_2O_3$; 15% to 20% by weight of silica sol; 30% to 40% by weight of silicon carbide particles; 0.01% to 1% by weight of calcium carbonate; and 0.4% to 0.6% by weight of carboxymethyl cellulose.

The sealing material (sealing material paste) for a honeycomb structured body of the present embodiment is acidic.
Although the pH value of the sealing material for a honeycomb structured body is not particularly limited as long as the sealing material is acidic, the sealing material preferably has a pH value in a range of 4 to 6. When the sealing material for a honeycomb structured body has a pH value of less than 4, the inorganic particles tend to aggregate in the prepared sealing material paste. When the sealing material has a pH value of more than 6, gelation of the prepared sealing material paste tends to occur.

As the method for preparing the sealing material for a honeycomb structured body by adjusting the pH value of the sealing material to be in a range of 4 to 6, for example, a method using an acidic oxide sol or the like may be exemplified.

Although the pH value of the acidic oxide sol is not particularly limited, the acidic oxide sol preferably has a pH value of 3 to 6. When the oxide sol has a pH value of less than 3, the pH value of the prepared sealing material paste becomes too low, which tends to cause aggregation of the inorganic particles. When the oxide sol has a pH value of more than 6, the pH value of the prepared sealing material paste becomes too high, which tends to cause gelation of the sealing material.

An acidic silica sol or an acidic alumina sol may be preferably used as the acidic oxide sol.

The following description will discuss the method for preparing the sealing material for a honeycomb structured body of the present embodiment.

An acidic sealing material for a honeycomb structured body is prepared by mixing the inorganic fibers, the inorganic particles, the metal-containing material, and the organic binder at the ratio mentioned earlier to prepare a mixture, and then adding an acidic oxide sol and an appropriate amount of water in the mixture, followed by kneading.

Accordingly, it is possible to prepare a sealing material for a honeycomb structured body which contains well-biosoluble inorganic fibers, has good applicability to the ceramic block and the like even long after the preparation of the sealing material paste, and can prevent strength reduction after being solidified.

The following description will discuss the honeycomb structured body according to an embodiment of the present invention.

The honeycomb structured body of the present embodiment is manufactured by using the aforementioned sealing material for a honeycomb structured body of the present embodiment.

Fig. 1 is a perspective view that schematically shows one example of a honeycomb structured body of the present invention.

Fig. 2 (a) is a perspective view that schematically shows one example of a honeycomb fired body that constitutes the honeycomb structured body of the present invention, and Fig. 2 (b) is an A-A line cross-sectional view of the honeycomb fired body shown in Fig. 2(a).

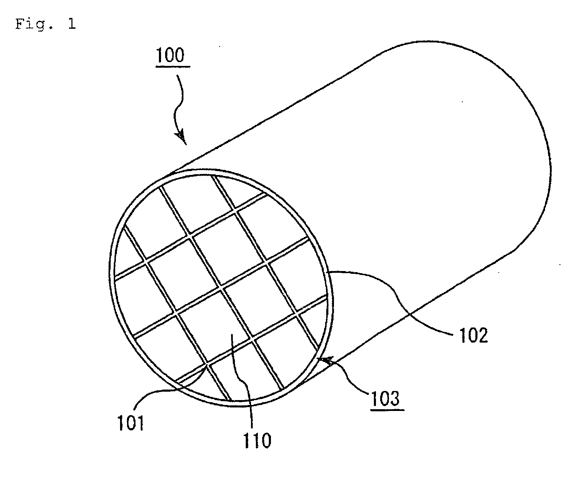

A honeycomb structured body 100 shown in Fig. 1 has a structure in which a plurality of porous silicon carbide honeycomb fired bodies 110 are bonded with one another with an adhesive layer 101 interposed therebetween to construct a ceramic block 103, with a peripheral sealing material layer 102 formed on the periphery face of the ceramic block 103.

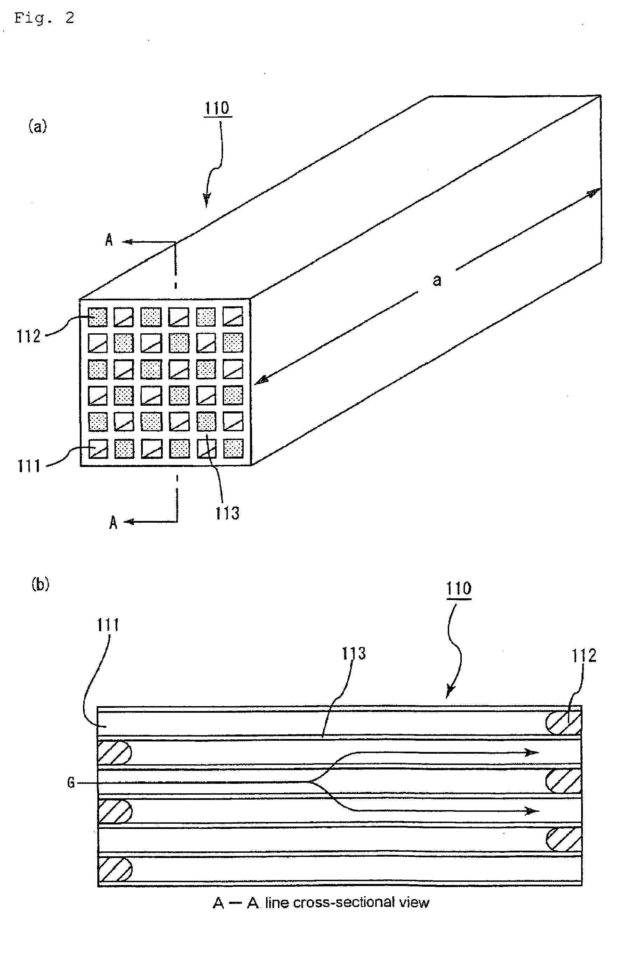

The honeycomb fired body 110 has a shape shown in Figs. 2(a) and 2(b).

The honeycomb fired body 110 shown in Figs. 2 (a) and 2 (b) has a structure in which a large number of cells 111 are longitudinally (the direction "a" in Fig. 2(a)) placed in parallel with one another with a cell wall 113 therebetween, and either one end of each of the cells 111 is plugged with a plug 112. Therefore, exhaust gases "G" having flowed into one of the cells 111 with an opening end on one end face surely passes through the cell wall 113 that separates the cells 111, and flows out from another cell 111 with an opening end on the another end face.

Therefore, the cell wall 113 functions as a filter for capturing PM and the like.

In the honeycomb structured body 100 of the present embodiment, the adhesive layer 101 and the peripheral sealing material layer 102 are formed by using the sealing material for a honeycomb structured body of the present embodiment.

The following description will discuss embodiments of the method for manufacturing a honeycomb structured body according to the present invention.

First, molding for manufacturing a honeycomb molded body is performed by extrusion-molding a wet mixture containing ceramic powders and a binder.

Specifically, as the ceramic powders, silicon carbide powders having different average particle diameters, an organic binder, a plasticizer in liquid form, a lubricant and water are mixed to prepare a wet mixture for manufacturing a honeycomb molded body.

Successively, this wet mixture is loaded into an extrusion molding machine and extrusion-molded so that a honeycomb molded body having a predetermined shape is manufactured.

Next, the honeycomb molded body is cut into a predetermined length, and dried by using a drying apparatus, such as a microwave drying apparatus, a hot-air drying apparatus, a dielectric drying apparatus, a reduced-pressure drying apparatus, a vacuum drying apparatus, and a freeze drying apparatus. Thereafter, plugging is carried out by filling predetermined cells with a plug material paste to be a plug for plugging the cells.

Next, degreasing is carried out to remove the organic components in the honeycomb molded body by heating the honeycomb molded body in a degreasing furnace. The degreased honeycomb molded body is transferred to a firing furnace to carry out firing so that a honeycomb fired body is manufactured.

Here, conditions conventionally used upon manufacturing a honeycomb fired body are applicable for carrying out the cutting, drying, sealing, degreasing and firing.

Next, bonding is carried out by forming the adhesive layer between a plurality of the honeycomb fired bodies so that the plurality of the honeycomb fired bodies are bonded with one another with the adhesive layer interposed therebetween according to the following method.

An paste-like adhesive including the sealing material for a honeycomb structured body of the present embodiment is applied on a predetermined side surface of each of the honeycomb fired bodies in which a predetermined end of each of the cells is plugged so as to form an adhesive paste layer. On the adhesive paste layer is placed one of other honeycomb fired bodies, and this process is sequentially repeated so that a honeycomb aggregated body in which the plurality of the honeycomb fired bodies are bonded with one another with the adhesive paste layer interposed therebetween is manufactured.

Next, the adhesive paste layer is solidified by heating the honeycomb aggregated body so that a ceramic block having an adhesive layer is constructed.

Thereafter, periphery cutting is performed by cutting side surfaces of the ceramic block using a diamond cutter and the like so that the ceramic block has a round pillar shape.

Further, forming a peripheral sealing material layer on the peripheral surface of the ceramic block is carried out according to the following method.

A peripheral sealing material paste layer is formed by applying the sealing material for a honeycomb structured body of the present embodiment using a squeeze. By solidifying the peripheral sealing material paste layer, a peripheral sealing material layer is formed.

According to the processes mentioned earlier, a honeycomb structured body including the sealing material for a honeycomb structured body (adhesive layer and peripheral sealing material layer) of the present embodiment can be manufactured.

The effects of the sealing material for a honeycomb structured body, the honeycomb structured body, and the method for manufacturing a honeycomb structured body according to the present embodiment will be recited below.

(1) The inorganic fibers contained in the sealing material for a honeycomb structured body of the present embodiment are biosoluble fibers. Therefore, even if the inorganic fibers are taken into human body, as they are soluble under physiological conditions, it is possible to secure the safety for human body of the sealing material for a honeycomb structured body containing the inorganic fibers.

Moreover, the honeycomb structured body manufactured by including the sealing material for a honeycomb structured body of the present embodiment is highly safe and can be safely handled by users such as operators and consumers. Further, operators can safely work in the manufacture of a honeycomb structured body by using the sealing material for a honeycomb structured body of the present embodiment.

(2) Since the sealing material for a honeycomb structured body of the present embodiment is acidic, it is possible to prevent elution of the polyvalent metal ions from the biosoluble fibers. Therefore, gelation of the sealing material can be avoided.

Accordingly, it is possible to prevent decrease in the flowability of the sealing material paste caused by increase in the viscosity of the sealing material paste even long after the preparation of the sealing material paste.

When forming the peripheral sealing material layer of the honeycomb structured body by using the sealing material for a honeycomb structured body of the present embodiment, gelation of the sealing material for a honeycomb structured body does not occur, and thus it is possible to prevent uneven thickness of the peripheral sealing material layer due to difficulty in evenly applying the sealing material paste. Accordingly, it is possible to prevent variation or reduction in the strength of the peripheral sealing material layer caused by uneven thickness of the peripheral sealing material layer.

(3) The sealing material for a honeycomb structured body of the present embodiment contains a metal-containing material including at least one member selected from the group consisting of Mg, Ca, and Sr. It is thus possible to supply the sealing material with the polyvalent metal ion that is necessary for maintaining (improving) the strength of the sealing material even when elution of the polyvalent metal ion is suppressed due to the sealing material being acidic. Therefore, the strength of the solidified sealing material can be prevented from decreasing.

(4) The honeycomb structured body of the present embodiment is an aggregated honeycomb structured body including a plurality of the honeycomb fired bodies.

In the honeycomb structured body in which a plurality of the honeycomb fired bodies are aggregated, an adhesive layer is necessary between the honeycomb fired bodies. Therefore, the total amount of the inorganic fibers contained in the honeycomb structured body is inevitably increased. Even in this case, since the honeycomb structured body of the present embodiment uses the sealing material for a honeycomb structured body of the present embodiment as an adhesive, it is possible to secure the safety of the honeycomb structured body for human body.

(5) In the honeycomb structured body of the present embodiment, the peripheral sealing material layer is formed by solidifying the sealing material for a honeycomb structured body of the present embodiment. Since the sealing material for a honeycomb structured body of the present embodiment shows no decrease in the strength after being solidified, damages such as cracks can be prevented from occurring in the peripheral sealing material layer.

(6) In the honeycomb structured body of the present embodiment, the adhesive layer is formed by solidifying the sealing material for a honeycomb structured body of the present embodiment. Since the sealing material for a honeycomb structured body of the present embodiment shows no decrease in its strength after being solidified, it is possible to prevent sliding or coming off of the honeycomb fired bodies which are bonded with one another with the adhesive layer interposed therebetween. Therefore, the honeycomb structured body can be stably used for a long period of time.

(7) In the method for manufacturing a honeycomb structured body of the present embodiment, when forming a peripheral sealing material layer, the sealing material for a honeycomb structured body of the present embodiment is applied on a peripheral surface of the ceramic block. Further, when forming the adhesive layer, the sealing material for a honeycomb structured body of the present embodiment is applied on a side surface of the honeycomb firedbody. Since the sealing material for a honeycomb structured body of the present embodiment shows no decrease in the flowability of the sealing material paste caused by increase in the viscosity of the sealing material paste even long after the preparation of the sealing material paste, it is possible to prevent a reduction in the processability upon formation of the peripheral sealing material layer or the adhesive layer.

EXAMPLES

Examples specifically disclosing the first embodiment of the present invention will be described below. The present invention is not limited to those Examples.

(1) Preparation of sealing material for a honeycomb structured body

In Examples and Comparative Examples, a sealing material for a honeycomb structured body was prepared using the following oxide sol and inorganic fibers.
The oxide sol used in Examples and Comparative Examples was an acidic silica sol having the following compositions: 20.4% by weight of $SiO_2$, 0.11% by weight of $Na_2O$, 0.17% by weight of $Al_2O_3$, and 79.3% by weight of $H_2O$.
Further, the inorganic fibers used in Examples and Comparative Examples were biosoluble fibers having the following compositions: 70.8% by weight of $SiO_2$, 0.6% by weight of $MgO$, 25.9% by weight of $CaO$, 0.8% by weight of $Al_2O_3$, and 1.9% by weight of other components.

(Example 1)

(Preparation of sealing material for a honeycomb structured body)

A sealing material for a honeycomb structured body having a pH value of 6.7 was prepared by mixing 37.4% by weight of the biosoluble fibers as inorganic fibers, 31.4% by weight of SiC powders as inorganic particles, 0.03% by weight of calcium carbonate as a metal-containing material, 0.4% by weight of carboxymethyl cellulose (CMC) as an organic binder, 17.4% by weight of the acidic silica sol having an average particle diameter of 12 nm and a pH value of 6.7, and 13.4% by weight of water, followed by kneading.

(Examples 2 to 10)

A sealing material for a honeycomb structured body was prepared in the same manner as that in Example 1, except that the calcium content in the sealing material for a honeycomb structured body was changed to the value shown in Table 1 by changing the amount of the calcium carbonate.

(Examples 11, 12)

A sealing material for a honeycomb structured body was prepared in the same manner as that in Example 1, except that magnesium carbonate or calcium sulfate was used in place of the calcium carbonate.

(Comparative Example 1)

A sealing material for a honeycomb structured body was prepared in the same manner as that in Example 1, except that the calcium carbonate was not added.

(Comparative Examples 2 to 6)

A sealing material for a honeycomb structured body was prepared in the same manner as that in Example 1, except that lithium carbonate, sodium carbonate, potassium carbonate, copper sulfate, or alminium sulfate was used in place of the calcium carbonate.

(2) Evaluation of sealing material for a honeycomb structured body

The sealing materials for a honeycomb structured body prepared in Examples and Comparative Examples were evaluated according to the following method.
For evaluation of the sealing materials for a honeycomb structured body, first, honeycomb fired bodies were prepared so as to prepare samples for evaluation. Each of the samples for evaluation included two pieces of the honeycomb fired bodies and the sealing material for a honeycomb structured body. Thereafter, evaluation of the breaking strength was performed using the samples for evaluation.
Next, a ceramic block was constructed by bonding sixteen pieces of the honeycomb fired bodies using the sealing material for a honeycomb structured body. By forming a peripheral sealing material layer on the periphery of the thus obtained ceramic block, a honeycomb structured body was manufactured. By using the honeycomb structured body, incidence of holes in the peripheral sealing material layer was evaluated.

(2-1) Manufacturing of samples for evaluation, and evaluation of mechanical property of solidified sealing material layer for a honeycomb structured body based on evaluation of breaking strength using the sample for evaluation

(Manufacturing of honeycomb fired body)

An amount of 52.8% by weight of silicon carbide coarse powders having an average particle diameter of 22 $\mu$m and an amount of 22.6% by weight of a silicon carbide fine powder having an average particle diameter of 0.5 $\mu$m were mixed. To the resulting mixture, 2.1% by weight of an acrylic resin, 4.6% by weight of an organic binder (methylcellulose), 2.8% by weight of a lubricant (UNILUB, manufactured by NOF Corporation), 1.3% by weight of glycerin, and 13.8% by weight of water were added, and then kneaded to prepare a wet mixture. The obtained wet mixture was extrusion-molded, so that a raw honeycomb molded body having virtually the same shape as the shape shown in Fig. 2(a) and having cells not plugged was manufactured.
Next, the raw honeycomb molded body was dried by using a microwave drying apparatus to obtain a dried honeycomb molded body. Then, using a plug material paste having the same composition as that of the wet mixture, predetermined cells were filled, and the dried honeycomb molded body in which the plug material paste was filled was again dried by using a drying apparatus.

The dried honeycomb molded body was degreased at 400°C, and then fired at 2200°C under normal pressure argon atmosphere for three hours, so that a honeycomb fired body comprising a silicon carbide sintered body, with a porosity of 45%, an average pore diameter of 15 $\mu$m, a size of 34.3 mm $\times$ 34.3 mm $\times$ 150 mm, the number of cells (cell density) of 300 pcs/inch$^2$ and a thickness of the cell wall of 0.25 mm (10 mil), was manufactured.

(Manufacturing of samples for evaluation)

Next, samples for evaluation were manufactured according to the following method.

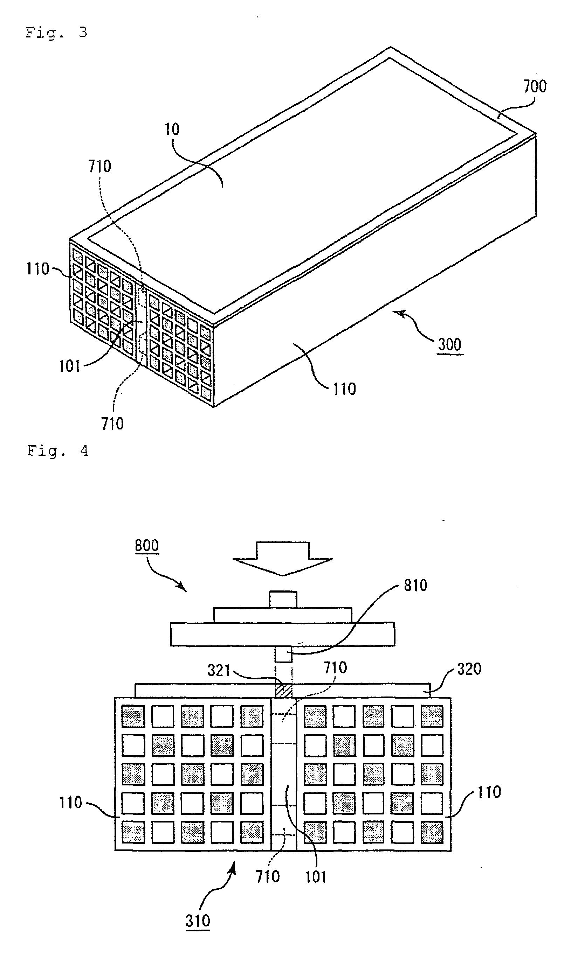

Fig. 3 is a perspective view that schematically shows a method for manufacturing samples for evaluation according to Examples and Comparative Examples.

Each of total four cardboard spacers 710 (thickness: 2.0 mm, Young's modulus: 0.01 GPa) was attached to each of the vicinities of the four corners of a side surface of one of honeycomb fired bodies 110. The spacer 710 was attached to a position where the shortest distances from peripheral portions of the spacer 710 to the two sides forming the corner of the side surface of the honeycomb fired body 110 were both 4.5 mm. Next, the sealing material for a honeycomb structured body prepared in Examples and Comparative Examples was applied on the side surface of the honeycomb fired body 110 to which the spacer 710 was attached. Another honeycomb fired body 110 was then bonded to the first honeycomb fired body 110 with the spacer 710 and the sealing material for a honeycomb structured body interposed therebetween. Thereafter the two honeycomb fired bodies 110 on which the sealing material for a honeycomb structured body was applied were heated at 120°C to solidify the sealing material for a honeycomb structured body so that an adhesive layer 101 having a thickness of 2.0 mm was formed.

Accordingly, a bonded body 300 including the two honeycomb fired bodies 110 and the adhesive layer 101 was manufactured (see Fig. 3).

Next, a peripheral sealing material layer for evaluation was formed on the upper surface of the bonded body 300. A jig 700 having a rectangular shape with a size of 70.6 mm in width $\times$ 150 mm in length $\times$ 0.2 mm in thickness and having an internal rectangular opening is placed on the upper surface of the bonded body 300. The opening was then filled in with a sealing material 10 for a honeycomb structured body prepared in Examples and Comparative Examples. The filled sealing material 10 for a honeycomb structured body was smoothed using a squeegee so as to match the thickness of the jig 700.

After smoothing the sealing material 10 for a honeycomb structured body, the jig 700 was removed. Thereafter, the bonded body 300 was heated at 120°C in a drying apparatus to solidify the sealing material 10 for a honeycomb structured body, thereby forming a peripheral sealing material layer for evaluation.

In accordance with the method mentioned earlier, a sample for evaluation including the bonded body 300 as shown in Fig. 3 and the peripheral sealing material layer for evaluation 320 (refer to Fig. 4) (thickness: 0.2 mm) was manufactured. Although Fig. 3 shows the jig 700 used for manufacturing the peripheral sealing material layer for evaluation 320, the jig 700 was removed before the breaking strength measurement.

(Evaluation of breaking strength)

The breaking strength of the peripheral sealing material layer for evaluation was measured for each of the samples for evaluation of Examples and Comparative Examples. The obtained value was used as an index of the bonding strength of the sealing material for a honeycomb structured body.

Fig. 4 is a side view that schematically shows a method for measuring the breaking strength of a peripheral sealing material layer for evaluation according to Examples and Comparative Examples.

A compression load was applied to a portion 321 (hereinafter referred to as central portion) which is a portion of the peripheral sealing material layer for evaluation 320, the central portion 321 being located between the two honeycomb fired bodies 110. The load at the time when the central portion 321 was broken was set as the breaking strength. In the measurement of the breaking strength, a texture analyzer 800 and a probe 810 for applying a compression load were used. The probe had a cylindrical pillar shape with a diameter of 1.5 mm and a length of 10 mm.

First, as shown in Fig. 4, the sample 310 for evaluation was placed at a position where a tip of the probe 810 came into contact with the central portion 321 when the probe was moved down. Next, the compression load (MPa) at the time when the probe 810, which was moved down at a speed of 10 mm/s, broke the central portion 321 was set as breaking strength (MPa). Table 1 shows the measurement result of the samples for evaluation.

(2-2) Manufacturing of honeycomb structured body, and evaluation of coating property on sealing material for a honeycomb structured body based on incidence of holes in peripheral sealing material layer using the honeycomb structured body

(Manufacturing of honeycomb structured body)

On a base having a V-shaped cross section, a honeycomb fired body was placed along the V-shaped cut surface. The sealing material for a honeycomb structured body prepared in Examples and Comparative Examples was applied on the honeycomb fired body on its side surface facing upward using a squeegee so that an adhesive paste layer was formed.
On the adhesive paste layer, each of total four spacers (thickness: 1.0mm) was placed on each of the vicinities of the four corners of the aforementioned side surface.
Each of the four spacers was placed at a position where the shortest distances from peripheral portions of the spacer to the two sides forming the corner of the side surface of the honeycomb fired body were both 4.5 mm.
Thereafter, other honeycomb fired body was placed on the adhesive paste layer and the spacers. The process including applying the sealing material for a honeycomb structured body on a side surface of the other honeycomb fired body, placing other spacers, and placing a next honeycomb fired body was repeated so that a honeycomb aggregated body, in which the honeycomb fired bodies were arranged in four columns and four rows, was manufactured.
The thickness (distance between the honeycomb fired bodies) of the adhesive paste layer was controlled to be 1.0 mm.
Further, by heating the honeycomb aggregated body at 120°C, the adhesive paste layer was solidified to be made into an adhesive layer. Accordingly, a ceramic block was manufactured.
The outer periphery of the ceramic block was cut with a diamond cutter into a round pillar shape.
Next, a peripheral sealing material paste layer having a thickness of 0.2 mm was formed on the periphery of the ceramic block using a peripheral sealing material paste which contained the same materials as those of the sealing material for a honeycomb structured body.
By drying the peripheral sealing material paste layer at 120°C, a honeycomb structured body having a round pillar shape with a diameter of 132.5 mm and a height of 150 mm, in which the peripheral sealing material layer was formed on the periphery of the ceramic block was manufactured.

(Supporting of catalyst)

Next, $\gamma$-alumina powders and a sufficient amount of water were mixed, and stirred to prepare an alumina slurry. The honeycomb structured body, with one of the end faces facing downward, was immersed in the alumina slurry and kept for one minute. Thereafter, drying for drying the honeycomb structured body at 110°C for one hour, and firing for further firing the resulting honeycomb structured body at 700°C for one hour were performed so that a catalyst supporting layer was formed.
Immersing the honeycomb structured body in the alumina slurry, drying and firing were repeated until the amount of the formed catalyst supporting layer reached 40g per liter of the apparent volume of the region where the catalyst supporting layer was formed in the honeycomb structured body.
After the formation of the catalyst supporting layer in the honeycomb structured body, the honeycomb structured body having the catalyst supporting layer formed therein was impregnated, with an end of the gas-inlet side facing downward, in a nitric acid solution of diammine dinitro platinum ($[Pt(NH_3)_2(NO_2)_2]HNO_3$, platinum concentration: 4% by weight) and kept for one minute. The resulting honeycomb structured body was dried at 110°C for two hours, and then fired at 500°C for one hour under a nitrogen atmosphere so that a platinum catalyst was supported on the catalyst supporting layer of the honeycomb structured body. The amount of the supported catalyst was controlled in a manner that 3 g of platinum was supported per 20 g of alumina as the catalyst supporting layer.

(Evaluation on incidence of holes in peripheral sealing material layer)

The honeycomb structured body prior to canning was evaluated for the incidence of holes in the peripheral sealing material layer using 100 pieces of the honeycomb structured bodies manufactured as mentioned earlier.
Presence of holes or cracks in the peripheral sealing material layer was visually checked for the honeycomb structured bodies prior to the canning. The ratio of the number of the honeycomb structured bodies in which holes or cracks were found in the peripheral sealing material layer with respect to the 100 pieces of the honeycomb structured bodies was determined as an incidence of holes (%) in the peripheral sealing material layer. Table 1 shows the evaluation results of the incidence of holes in peripheral sealing material layer.
Table 1 collectively shows the substances and the metal contents of the metal-containing materials used for preparing the sealing materials for a honeycomb structured body as well as the results of the breaking strength and the incidence of holes in the peripheral sealing material layer relating to the sealing materials for a honeycomb structured body prepared in Examples 1 to 12 and Comparative Examples 1 to 6.

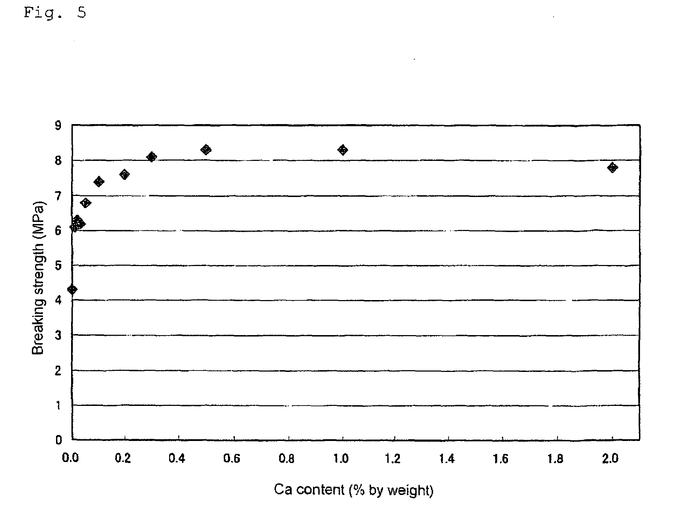

Further, a graph of Fig. 5 shows the relations between the calcium content in the sealing material for a honeycomb structured body and the breaking strength based on the results of the measurement of the breaking strength in Examples 1 to 10 and Comparative Example 1.

Table 1

| | Metal-containing material | | | Result of Evaluation | | |
|---|---|---|---|---|---|---|
| | Substance | Metal | Content (Wt%) | Breaking strength (MPa) | Incidence of holes in peripheral sealing material layer (%) | |
| Example 1 | Calcium carbonate | Ca | 0.03 | 6.2 | 0 | |
| Example 2 | Calcium carbonate | Ca | 0.01 | 6.1 | 0 | |
| Example 3 | Calcium carbonate | Ca | 0.02 | 6.3 | 0 | |
| Example 4 | Calcium carbonate | Ca | 0.05 | 6.8 | 0 | |
| Example 5 | Calcium carbonate | Ca | 0.1 | 7.4 | 0 | |
| Example 6 | Calcium carbonate | Ca | 0.2 | 7.6 | 0 | |
| Example 7 | Calcium carbonate | Ca | 0.3 | 8.1 | 0 | |
| Example 8 | Calcium carbonate | Ca | 0.5 | 8.3 | 0 | |
| Example 9 | Calcium carbonate | Ca | 1.0 | 8.3 | 0 | |
| Example 10 | Calcium carbonate | Ca | 2.0 | 7.8 | 0 | |
| Example 11 | Magnesium carbonate | Mg | 0.03 | 6.1 | 0 | |
| Example 12 | Calcium sulfate | Ca | 0.03 | 6.1 | 0 | |
| Comparative Example 1 | Calcium carbonate | Ca | 0 | 4.3 | 8 | |
| Comparative Example 2 | Lithium carbonate | Li | 0.03 | 4.2 | 7 | |
| Comparative Example 3 | Sodium carbonate | Na | 0.03 | 4.0 | 9 | |
| Comparative Example 4 | Potassium carbonate | K | 0.03 | 4.3 | 8 | |
| Comparative Example 5 | Copper sulfate | Cu | 0.03 | - | - | (Note) |

(continued)

|  | Metal-containing material | | | Result of Evaluation | | |
|---|---|---|---|---|---|---|
|  | Substance | Metal | Content (Wt%) | Breaking strength (MPa) | Incidence of holes in peripheral sealing material layer (%) |  |
| Comparative Example 6 | Aluminum sulfate | Al | 0.03 | - | - | (Note) |
| (Note) Due to gelation during manufacturing, a sealing material for a honeycomb structured body could not be manufactured in Comparative Examples 5 and 6. | | | | | | |

The results of the measurement of the breaking strength of the peripheral sealing material layers for evaluation showed that when the calcium content in the sealing material for a honeycomb structured body was 0.01% to 1.0% by weight, the breaking strength was as high as 6.1 to 8.3 MPa. Moreover, when the calcium content in the sealing material for a honeycomb structured body was 2.0% by weight, the breaking strength was 7.8 MPa and the calcium content in the sealing material for a honeycomb structured body was saturated.
In the case where the peripheral sealing material layer for evaluation had a breaking strength of 6.0 MPa or more, the sealing material layer for a honeycomb structured body may be of a level that can be practically used as the peripheral sealing material.

Further, as shown in the graph of Fig. 5, a larger amount of Ca in the sealing material for a honeycomb structured body resulted in a higher breaking strength until the calcium content reached saturation point. This indicates that the breaking strength of the peripheral sealing material layer for evaluation depends on the calcium content in the sealing material for a honeycomb structured body.

Moreover, in the case where the sealing material for a honeycomb structured body was prepared using magnesium carbonate or calcium sulfate in place of the calcium carbonate, the breaking strength was 6.1 MPa in each case. In other words, the breaking strength was similarly 6.0 MPa or more as in the case of the sealing material for a honeycomb structured body prepared using calcium carbonate.

On the other hand, in the case where the calcium content in the sealing material for a honeycomb structured body was 0% by weight, the breaking strength was as low as 4.3 MPa.

In the case where the sealing material for a honeycomb structured body was prepared using lithium carbonate, sodium carbonate or potassium carbonate in place of the calcium carbonate, the breaking strength was 4.2 MPa, 4.0 MPa, or 4.3 MPa, respectively. Those values were similar with the value in the result of Comparative Example 1 in which no metal-containing material was added. Namely, use of the foregoing metal-containing materials did not produce any breaking strength-improving effects of the sealing material.
In the case where the sealing material for a honeycomb structured body was prepared using copper sulfate or aluminum sulfate, gelation of the sealing material paste occurred upon manufacturing the sealing material for a honeycomb structured body, making it impossible to manufacture a sealing material for a honeycomb structured body.

Next, the incidence of holes in the peripheral sealing material layers was evaluated. The results showed that when the calcium content in the sealing material for a honeycomb structured body was 0.01% to 1.0% by weight, the incidence of holes was 0% by weight, namely no holes or cracks occurred in the peripheral sealing material layer. Also, in the case where the calcium content in the sealing material layer for a honeycomb structured body was 2.0% by weight, no holes or cracks occurred in the peripheral sealing material layer.

Moreover, in the case where the sealing material for a honeycomb structured body was prepared using magnesium carbonate or calcium sulfate in place of the calcium carbonate, the incidence of holes in the peripheral sealing material layer was 0%.

On the other hand, in the case where the sealing material for a honeycomb structured body contains 0% by weight of Ca or in the case where the sealing material for a honeycomb structured body was prepared using lithium carbonate, sodium carbonate or potassium carbonate in place of the calcium carbonate, the incidence of holes in the peripheral sealing material layer was as high as 7 to 9%.

Accordingly, it has been found that when a metal-containing material that contains Ca or Mg is added to the sealing material for a honeycomb structured body, a peripheral sealing material layer for evaluation with excellent breaking strength can be formed. The sealing material for a honeycomb structured body of this kind may thus have excellent adhesion strength. Therefore, when the sealing material for a honeycomb structured body is used as the peripheral sealing material for a honeycomb structured body, damages such as cracks may be prevented from occurring in the peripheral sealing material layer.

In addition to the foregoing metal-containing materials, use of calcium acetate, magnesium nitrate, magnesium sulfate, magnesium acetate, or strontium carbonate may produce similar effects as those achieved in Examples of the present invention.

(Second Embodiment)

The following description will discuss a second embodiment that is one of other embodiments of the present invention. In the present embodiment, although the composition of the sealing material for a honeycomb structured body and the structure of the honeycomb structured body are the same as those in the first embodiment, a different method for forming an adhesive layer is used in the method for manufacturing a honeycomb structured body.

First, a plurality of honeycomb fired bodies are placed in parallel with one another in columns and rows, with a spacer interposed therebetween. The spacer is designed to have the same thickness as the thickness of the adhesive layer formed between the honeycomb fired bodies. As a result, a gap corresponding to the thickness of the spacer is formed between the honeycomb fired bodies.

Thereafter, 16 pieces of honeycomb fired bodies are placed in parallel with one another in four columns and four rows to form a parallel-arranged body of honeycomb fired bodies.

Successively, the gap formed between the honeycomb fired bodies placed in parallel with one another is filled in with the sealing material for a honeycomb structured body described in the first embodiment by using a filling apparatus. In filling the gap formed between the honeycomb fired bodies with the sealing material for a honeycomb structured body described in the first embodiment, the parallel-arranged body of honeycomb fired bodies is placed inside the inner space of a tubiform, and the sealing material paste supply unit is set up to the end face of the tubiform. Then, the sealing material for a honeycomb structured body described in the first embodiment is extruded from a paste chamber of the sealing material paste supply unit by using an extruding mechanism to fill the gap between the honeycomb fired bodies. Through these processes, a laminated body of the honeycomb fired bodies having the 16 pieces of honeycomb fired bodies with the gap filled with the sealing material for a honeycomb structured body as an adhesive is manufactured.

Successively, the laminated body of the honeycomb fired bodies is heated by using a drying apparatus or the like to dry and solidify the adhesive so that an adhesive layer is formed.

Through these processes, a rectangular pillar-shaped ceramic block including 16 pieces of the honeycomb fired bodies can be manufactured.

In forming the peripheral sealing material layer, the same method as that of the first embodiment in which, after peripheral cutting, the sealing material for a honeycomb structured body described in the first embodiment is applied to the peripheral surface of the ceramic block by using a squeegee is used.

In addition to the foregoing effects (1) to (6) described in the first embodiment, the present embodiment can produce the following effects.

(8) In the method for manufacturing a honeycomb structured body of the present embodiment, when forming the adhesive layer, the gap between the honeycomb fired bodies is filled in with the sealing material for a honeycomb structured body described in the first embodiment. Since the sealing material for a honeycomb structured body shows no decrease in the flowability caused by increase in the viscosity of the sealing material paste even long after the preparation of the sealing material paste, filling of the sealing material for a honeycomb structured body as an adhesive can be easily performed.

(9) In the method for manufacturing a honeycomb structured body according to the present embodiment, when forming the peripheral sealing material layer, the sealing material for a honeycomb structured body described in the first embodiment is applied to the peripheral surface of the ceramic block. Since the sealing material for a honeycomb structured body shows no decrease in the flowability caused by increase in the viscosity of the sealing material paste even long after the preparation of the sealing material paste, it is possible to prevent deterioration of the processability upon formation of the peripheral sealing material layer.

(Third Embodiment)

The following description will discuss a third embodiment that is one of other embodiments of the present invention.

In the present embodiment, the composition of the sealing material for a honeycomb structured body and the structure of a honeycomb structured body are the same as those of the first embodiment, and the shape of the honeycomb structured body is virtually the same as that of the first embodiment. At the same time, honeycomb fired bodies having a different shape from that of the first embodiment are used, and different methods for forming an adhesive layer and a peripheral sealing material layer from those of the first embodiment are employed in the method for manufacturing a honeycomb structured body.

In the method for manufacturing a honeycomb structured body of the present embodiment, three kinds of honeycomb fired bodies each having a different shape in the cross-section perpendicular to the longitudinal direction thereof are manufactured. The cross-section of a first honeycomb fired body has a shape surrounded by two straight lines and one curve. The cross-section of a second honeycomb fired body has a shape surrounded by three straight lines and one curve. The cross-section of a third honeycomb fired body has a shape surrounded by four straight lines. These three kinds of honeycomb fired bodies having mutually different cross-sectional shapes can be manufactured by altering the shape of a die to be used for extrusion-molding. Those honeycomb fired bodies correspond, for example, to the honeycomb fired bodies having three kinds of shapes configuring the honeycomb structured body shown in Fig. 1.

Thereafter, a plurality of these three kinds of honeycomb fired bodies are placed in columns and rows in parallel with one another, with a spacer interposed therebetween, to form a parallel-arranged body of honeycomb fired bodies having a virtually round shape in its cross-section perpendicular to the longitudinal direction. At this time, a gap having a thickness of the spacer is formed between the respective honeycomb fired bodies.

Successively, the parallel-arranged body of honeycomb fired bodies is placed in a filling device having a cylindrical tubiform, and a gap formed between the honeycomb fired bodies and a gap formed between the honeycomb fired bodies and the tubiform were filled in with a sealing material for a honeycomb structured body described in the foregoing first embodiment.

A filling device used in the present embodiment is provided with the cylindrical tubiform and a sealing material paste supply unit. The tubiform has a slightly larger inner diameter than the diameter of the parallel-arranged body of honeycomb fired bodies to be placed in the tubiform. Therefore, when the parallel-arranged body of honeycomb fired bodies is placed in the inner space of the tubiform, a gap is formed between the tubiform and the parallel-arranged body of honeycomb fired bodies.

The sealing material paste supply unit is configured to have a structure which enables simultaneously filling the gap between the honeycomb fired bodies and the gap between the tubiform and the parallel-arranged body of the honeycomb fired bodies with the sealing material for a honeycomb structured body described in the foregoing first embodiment, the sealing material stored in the sealing material paste chamber.

In the method for manufacturing a honeycomb structured body of the present embodiment, by using the parallel-arranged body of honeycomb fired bodies and the filling apparatus that have been described above, the gap between the honeycomb fired bodies and the gap between the honeycomb fired bodies and the tubiform are filled in with the sealing material for a honeycomb structured body described in the foregoing first embodiment. Next, the sealing material for a honeycomb structured body is dried and solidified so that the adhesive layer between the honeycomb fired bodies and the peripheral sealing material layer are simultaneously formed.

In addition to the effects (1) to (6) described in the first embodiment, the present embodiment can produce the following effects.

(10) In the method for manufacturing a honeycomb structured body of the present embodiment, when forming the adhesive layer and the peripheral sealing material layer, the gap between the honeycomb fired bodies and the gap between the honeycomb fired bodies and the tubiform are filled in with the sealing material for a honeycomb structured body described in the first embodiment. Since the sealing material for a honeycomb structured body shows no decrease in the flowability caused by increase in the viscosity of the sealing material paste even long after the preparation of the sealing material paste, filling of the sealing material for a honeycomb structured body as an adhesive and a peripheral sealing material can be easily performed. Accordingly, it is possible to simultaneously and easily form the adhesive layer between the honeycomb fired bodies and the peripheral sealing material layer.

(11) In the method for manufacturing the honeycomb structured body of the present embodiment, the parallel-arranged body of honeycomb fired bodies having an almost circular shape in its cross section perpendicular to the longitudinal direction is manufactured by placing in columns and rows a plurality of three kinds of honeycomb fired bodies having different cross-sectional shapes in the longitudinal direction thereof. Accordingly, it is possible to manufacture a honeycomb structured body having a predetermined outer peripheral shape without peripheral cutting.

(Fourth Embodiment)

The following description will discuss a fourth embodiment that is still one of other embodiments of the present invention.

In the present embodiment, the composition of the sealing material for a honeycomb structured body is the same as that of the first embodiment. At the same time, the shape of the honeycomb structured body and the method for manufacturing a honeycomb structured body are different from those of the first embodiment.

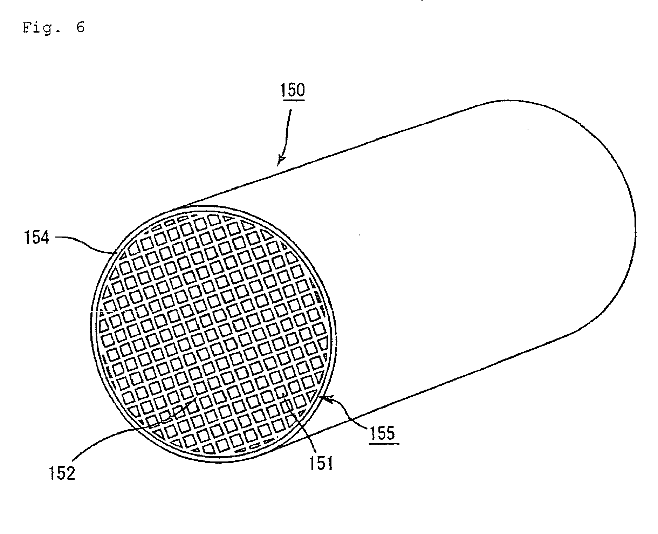

Fig. 6 is a perspective view that schematically shows one of other examples of the honeycomb structured body of the present invention.

A honeycomb structured body 150 shown in Fig. 6 has a ceramic block 155 including a single piece of a pillar-shaped honeycomb fired body in which a large number of cells 151 are longitudinally placed in parallel with one another with a cell wall 152 therebetween, and a peripheral sealing material layer 154 is formed on the periphery of the ceramic block 155.

In the method for manufacturing a honeycomb structured body of the present embodiment, honeycomb fired bodies are manufactured by following the same procedure as in the first embodiment, except that a honeycomb molded body having a virtually cylindrical shape is formed by altering the shape of a die used for extrusion-molding.

This honeycomb fired body is allowed to form a ceramic block without bonding of a plural of honeycomb fired bodies. Thereafter, forming a peripheral sealing material layer on the peripheral surface of the ceramic block is carried out by using the sealing material for a honeycomb structured body of the first embodiment.

When forming peripheral sealing material layer, the same method as that of the first embodiment in which the sealing material for a honeycomb structured body is applied to the peripheral surface of the ceramic block by using a squeegee may be used, or the same method as that of the third embodiment in which the gap formed between the peripheral surface of the ceramic block and the tubiform is filled in with the sealing material for a honeycomb structured body by using a filling apparatus, may be used.

In this embodiment, the effects (1) to (4) described in the foregoing first embodiment and the effect (9) described in the foregoing second embodiment can be exhibited.

(Other Embodiments)

In the honeycomb structured body of the present invention, the sealing material for a honeycomb structured body used to form the adhesive layer and the sealing material for a honeycomb structured body used to form the peripheral sealing material layer may include the same materials or different materials.

Moreover, as the adhesive, other than the sealing material for a honeycomb structured body of the present invention, an adhesive paste that has been conventionally used for manufacturing a honeycomb structured body may be used

In the method for preparing the sealing material for a honeycomb structured body according to the present invention, an oxide sol which is alkaline may be used in place of the oxide sol which is acidic.

The pH value of the alkaline oxide sol is not particularly limited, and preferably in a range of 8.5 to 10.5.

Preferable examples of the alkaline oxide sol include an alkaline silica sol.

The alkaline oxide sol is mixed with an acidic solution to adjust the pH value of the resultant sealing material paste in a range of 4 to 6.

The pH value of the acidic solution is not particularly limited, and the pH value is preferably in a range of 1 to 3.

Moreover, kinds of the acidic solution are not particular limited, and examples thereof include a water solution of hydrochloric acid, sulfric acid, nitric acid, phosphoric acid, lactic acid, acetic acid, formic acid or the like. A water solution of lactic acid is especially preferable among the above acidic solutions.

Although not particularly limited, the shape of the honeycomb fired bodies is preferably designed to easily bond the honeycomb fired bodies with one another when manufacturing a honeycomb structured body. For example, a shape having a square, rectangular, hexagonal, sector shape or the like in its cross-section may be used.

The shape of the honeycomb structured body of the present invention is not particularly limited to a round pillar shape, and may be a desired pillar shape such as a cylindroid shape, a pillar shape with a racetrack end face, and a polygonal pillar shape.

Although not particularly limited, the porosity of the honeycomb fired body is preferably 35 to 60%.

When the honeycomb structured body manufactured by using the aforementioned honeycomb fired body is used as a filter, the porosity of less than 35% may easily cause clogging in the filter. On the other hand, the porosity exceeding 60% may cause a reduction in the strength of the honeycomb fired body, resulting in easy breakage of the filter.

The average pore diameter of the honeycomb fired body is preferably 5 to 30 $\mu$m.

When the honeycomb structured body manufactured by using the aforementioned honeycomb fired body is used as a filter, the average pore diameter of less than 5 $\mu$m may easily cause clogging in the filter. On the other hand, the average pore diameter exceeding 30 $\mu$m may allow particulates to easily pass through the pores. As a result, the honeycomb fired body may fail to capture the particulates, resulting in a failure in functioning as a filter.

The porosity and the pore diameter can be measured through conventionally known methods such as a mercury porosimetry, Archimedes method, and a measuring method using a scanning electronic microscope (SEM).

The cell density in the cross-section perpendicular to the longitudinal direction of the honeycomb fired body is not particularly limited. A preferable lower limit of the cell density is 31.0 pcs/cm$^2$ (200 pcs/inch$^2$) and a preferable upper limit thereof is 93.0 pcs/cm$^2$ (600 pcs/inch$^2$). A more preferable lower limit of the cell density is 38.8 pcs/cm$^2$ (250 pcs/inch$^2$) and a more preferable upper limit thereof is 77.5 pcs/cm$^2$ (500 pcs/inch$^2$).

Further, the thickness of the cell walls of the honeycomb fired body is not particularly limited, and preferably 0.1 to 0.4 mm.

The main component of constituent materials of the honeycomb fired body is not limited to silicon carbide. Examples of other ceramic materials include ceramic powders, for example, nitride ceramics such as aluminum nitride, silicon nitride, boron nitride and titanium nitride; carbide ceramics such as zirconium carbide, titanium carbide, tantalum carbide and tungsten carbide; oxide ceramics such as alumina, zirconia, cordierite, mullite, and aluminum titanate; and the like.

Non-oxide ceramics are preferable, and silicon carbide is more preferable among the above components, because they are excellent in thermal resistance properties, mechanical strength, thermal conductivity and the like. Moreover, examples of the constituent material of the honeycomb fired body also include silicon-containing ceramics, in which metallic silicon is blended with the foregoing ceramics, as well as a ceramic material such as ceramic in which the forgoing ceramics is bound by silicon or silicate compounds. The ceramics (silicon-containing silicon carbide) in which metallic silicon is blended with the silicon carbide are preferably used.

A silicon-containing silicon carbide ceramic containing 60% by weight or more of silicon carbide is especially preferable.

The organic binder used when preparing the wet mixture is not particularly limited, and examples thereof include methylcellulose, carboxymethylcellulose, hydroxyethylcellulose, polyethylene glycol, and the like. Methylcellulose is preferable among the above examples. A blending amount of the organic binder is preferably 1 to 10 parts by weight with respect to 100 parts by weight of ceramic powder.

The plasticizer used when preparing the wet mixture is not particularly limited, and examples thereof include glycerin and the like. The lubricant is not particularly limited, and examples thereof include polyoxyalkylene-based compounds such as polyoxyethylene alkyl ether and polyoxypropylene al kyl ether, and the like. Specific examples of the lubricant include polyoxyethylene monobutyl ether, polyoxypropylene monobutyl ether and the like.

Moreover, the plasticizer and the lubricant may optionally not be contained in the wet mixture.

In addition, a dispersant solution may be used upon preparing a wet mixture, and examples of the dispersant solution include water, an organic solvent such as benzene, alcohol such as methanol and the like.

Moreover, a molding auxiliary may be added to the wet mixture.

The molding auxiliary is not particularly limited, and examples thereof include ethylene glycol, dextrin, fatty acid, fatty acid soap, polyalcohol and the like.

Furthermore, a pore-forming agent such as balloons that are fine hollow spheres including oxide-based ceramics, spherical acrylic particles, graphite and the like may be added to the wet mixture, if necessary.

The balloon is not particularly limited, and examples thereof include alumina balloon, glass micro balloon, shirasu balloon, fly ash balloon (FA balloon), mullite balloon and the like. Alumina balloon is preferable among the above examples.

The plug material paste for plugging the cells is not particularly limited, a plug to be manufactured through the subsequent processes preferably has a porosity of 30 to 75%, and for example, it is possible to use a plug material paste having the same composition as that of the wet mixture of the raw material for honeycomb fired body.

The catalyst to convert and/or purify exhaust gases may be supported on the honeycomb structured body, and preferable examples of the catalyst to be supported include noble metals such as platinum, palladium and rhodium. Platinum is more preferable among these. Moreover, an alkali metal such as sodium and potassium, and an alkaline earth metal such as barium may be used as other catalysts. These catalysts may be used alone, or two or more kinds of these may be used in combination.

The above description has only discussed the honeycomb structured body (honeycomb filter) in which either one end portion of each of the cells is plugged. However, the honeycomb structured body of the present invention does not always need to have an end portion of each cell plugged, and such honeycomb structured bodies may be preferably used as a catalyst supporting carrier.

BRIEF DESCRIPTION OF THE DRAWINGS

Fig. 1 is a perspective view that schematically shows one example of a honeycomb structured body of the present invention.

Fig. 2 (a) is a perspective view that schematically shows one example of a honeycomb fired body that constitutes the honeycomb structured body of the present invention, and Fig. 2 (b) is an A-A line cross-sectional view of the honeycomb fired body shown in Fig. 2(a).

Fig. 3 is a perspective view that schematically shows a method for manufacturing samples for evaluation according to Examples and Comparative Examples.

Fig. 4 is a side view that schematically shows a method for measuring the breaking strength of a peripheral sealing material layer for evaluation according to Examples and Comparative Examples.

Fig. 5 is a graph that shows relations between the calcium content in a sealing material for a honeycomb structured body and breaking strength relating to the sealing materials for a honeycomb structured bodies prepared in Examples 1 to 10 and Comparative Example 1.

Fig. 6 is a perspective view that schematically shows one of other examples of the honeycomb structured body of the present invention.

EXPLANATION OF SYMBOLS

| | |
|---|---|
| 10 | Sealing material for a honeycomb structured body |
| 100, 150 | Honeycomb structured body |
| 101 | Adhesive layer |
| 102, 154 | Peripheral sealing material layer |
| 103, 155 | Ceramic block |
| 110 | Honeycomb fired body |
| 111, 151 | Cell |
| 113, 152 | Cell wall |
| G | Exhaust gas |

**Claims**

1. A sealing material for a honeycomb structured body, comprising:

    inorganic fibers comprising a biosoluble inorganic compound;
    an oxide sol;
    inorganic particles; and
    a metal-containing material that contains at least one member selected from the group consisting of Mg, Ca, and Sr,
    the sealing material being acidic.

2. The sealing material for a honeycomb structured body according to claim 1,
    wherein
    the biosoluble inorganic compound is at least one of an alkali metal compound and an alkaline earth metal compound.

3. The sealing material for a honeycomb structured body according to claim 1 or 2,
    wherein
    the metal-containing material is at least one member selected from the group consisting of calcium carbonate, calcium acetate, magnesium carbonate, magnesium nitrate, magnesium sulfate, and magnesium acetate.

4. The sealing material for a honeycomb structured body according to claim 3,
    wherein
    the metal-containing material is calcium carbonate or calcium acetate.

5. The sealing material for a honeycomb structured body according to claim 4,
    wherein
    a calcium content in the sealing material for a honeycomb structured body is 0.01% to 1.0% by weight.

6. A honeycomb structured body comprising:

    a ceramic block comprising a honeycomb fired body in which a large number of cells are longitudinally placed in parallel with one another with a cell wall interposed therebetween; and
    a peripheral sealing material layer formed on a peripheral surface of the ceramic block,
    wherein
    the peripheral sealing material layer is formed by solidifying the sealing material for a honeycomb structured body according to any one of claims 1 to 5.

**7.** The honeycomb structured body according to claim 6,
wherein
the ceramic block comprises a plurality of the honeycomb fired bodies, and
an adhesive layer formed between side surfaces of the plurality of the honeycomb fired bodies.

**8.** The honeycomb structured body according to claim 7,
wherein
the adhesive layer is formed of a solidified adhesive.

**9.** The honeycomb structured body according to claim 8,
wherein
the adhesive is the sealing material for a honeycomb structured body according to any one of claims 1 to 5.

**10.** A method for manufacturing a honeycomb structured body,
the honeycomb structured body comprising:

a ceramic block comprising a honeycomb fired body in which a large number of cells are longitudinally placed in parallel with one another with a cell wall interposed therebetween; and
a peripheral sealing material layer formed on a peripheral surface of the ceramic block,

the method comprising:

preparing a sealing material for a honeycomb structured body containing inorganic fibers comprising a biosoluble inorganic compound, an oxide sol, inorganic particles, and a metal-containing material that contains at least one member selected from the group consisting of Mg, Ca, and Sr, the sealing material for a honeycomb structured body being acidic; and
forming the peripheral sealing material layer by forming a peripheral sealing material paste layer comprising the sealing material for a honeycomb structured body on a peripheral surface of the ceramic block and solidifying the peripheral sealing material paste layer.

**11.** The method for manufacturing a honeycomb structured body according to claim 10, further comprising bonding for constructing the ceramic block, the ceramic block comprising a plurality of the honeycomb fired bodies which are bonded with one another with an adhesive layer interposed therebetween,
the bonding including:

preparing a honeycomb aggregated body in which a plurality of the honeycomb fired bodies are bonded with one another with an adhesive layer paste interposed therebetween; and
solidifying the adhesive layer paste to form the adhesive layer.

**12.** The method for manufacturing a honeycomb structured body according to claim 11,
wherein
the sealing material for a honeycomb structured body is used as the adhesive layer paste.

**13.** The method for manufacturing a honeycomb structured body according to any one of claims 10 to 12,
wherein
the inorganic compound is at least one of an alkali metal compound and an alkaline earth metal compound.

**14.** The method for manufacturing a honeycomb structured body according to any one of claims 10 to 13,
wherein
the metal-containing material is at least one member selected from the group consisting of calcium carbonate, calcium acetate, magnesium carbonate, magnesium nitrate, magnesium sulfate, and magnesium acetate.

**15.** The method for manufacturing a honeycomb structured body according to claim 14,
wherein
the metal-containing material is calcium carbonate or calcium acetate.

**16.** The method for manufacturing a honeycomb structured body according to claim 15,
wherein

a calcium content in the sealing material for a honeycomb structured body is 0.01% to 1.0% by weight.

**Patentansprüche**

1.  Dichtungsmaterial für einen Wabenstrukturkörper, welches folgendes umfasst:

    anorganische Fasern, die folgendes umfassen: eine biolösliche anorganische Verbindung;
    ein Oxidsol;
    anorganische Partikel; und
    ein metallhaltiges Material, das mindestens ein Mitglied enthält, das aus Mg, Ca und Sr ausgewählt ist, wobei das Dichtungsmaterial sauer ist.

2.  Dichtungsmaterial für einen Wabenstrukturkörper gemäß Anspruch 1, wobei die biolösliche anorganische Verbindung mindestens eine Alkalimetallverbindung und/oder eine Erdalkalimetallverbindung ist.

3.  Dichtungsmaterial für einen Wabenstrukturkörper gemäß Anspruch 1 oder 2, wobei das metallhaltige Material mindestens ein Mitglied ist, das aus Kalziumcarbonat, Kalziumacetat, Magnesiumcarbonat, Magnesiumnitrat, Magnesiumsulfat und Magnesiumacetat ausgewählt ist.

4.  Dichtungsmaterial für einen Wabenstrukturkörper gemäß Anspruch 3, wobei das metallhaltige Material Kalziumcarboant oder Kalziumacetat ist.

5.  Dichtungsmaterial für einen Wabenstrukturkörper gemäß Anspruch 4, wobei ein Kalziumgehalt in dem Dichtungsmaterial für einen Wabenstrukturkörper 0,01 bis 1,0 Gew.% ist.

6.  Wabenstrukturkörper der folgendes umfasst:

    einen Keramikblock, der einen wabenförmig gebrannten Körper umfasst, in dem eine große Anzahl von Zellen der Länge nach parallel zueinander mit einer dazwischenliegenden Zellwand angeordnet sind; und
    eine periphere Dichtungsmaterialschicht, die auf einer peripheren Oberfläche des Keramikblocks gebildet ist, wobei die periphere Dichtungsmaterialschicht durch Verfestigung des Dichtungsmaterials für einen wabenförmigen Strukturkörper gemäß irgendeinem der Ansprüche 1 bis 5 gebildet ist.

7.  Wabenstrukturkörper gemäß Anspruch 6, wobei der Keramikblock eine Vielzahl von wabenförmig gebrannten Körpern und eine Haftschicht umfasst, die zwischen den Seitenflächen der Vielzahl der wabenförmig gebrannten Körpern gebildet ist.

8.  Wabenstrukturkörper gemäß Anspruch 7, wobei die Haftschicht aus einem verfestigten Haftmittel gebildet ist.

9.  Wabenstrukturkörper gemäß Anspruch 8, wobei das Haftmittel das Dichtungsmaterial für einen Wabenstrukturkörper gemäß irgendeinem der Ansprüche 1 bis 5 ist.

10. Verfahren zur Herstellung eines Wabenstrukturkörpers, bei dem der Wabenstrukturkörper folgendes umfasst:

    einen Keramikblock, der einen wabenförmig gebrannten Körper umfasst, in dem eine große Anzahl von Zellen in Längsrichtung parallel zueinander mit dazwischenliegenden Zellwänden angeordnet ist; und
    eine periphere Dichtungsmaterialschicht auf einer peripheren Oberfläche des Keramikblocks gebildet ist, wobei das Verfahren folgendes umfasst:

    Herstellen eines Dichtungsmaterials für einen Wabenstrukturkörper, der anorganische Fasern enthält, die eine biolösliche anorganische Verbindung, ein Oxidsol, anorganische Partikel und ein metallhaltiges Material umfasst, das mindestens ein Mitglied enthält, welches aus Mg, Ca und Sr ausgewählt ist, wobei das Dichtungsmaterial für einen Wabenstrukturkörper sauer ist; und
    Bilden der peripheren Dichtungsmaterialschicht durch Bilden einer peripheren Dichtungsmaterialpasteschicht, die das Dichtungsmaterial für einen Wabenstrukturkörper auf einer peripheren Oberfläche des Keramikblocks umfasst und Verfestigen der peripheren Dichtungsmaterialpasteschicht.

11. Verfahren zur Herstellung eines Wabenstrukturkörpers gemäß Anspruch 10, welches weiterhin den Schritt des Verbindens zum Aufbau des Keramikblocks umfasst, wobei der Keramikblock eine Vielzahl der wabenförmig gebrannten Körpern umfasst, die miteinander mit einer dazwischenliegenden Haftschicht verbunden sind, wobei das Verbinden folgendes einschließt:

Herstellen eines wabenförmig zusammengesetzten Körpers, in dem eine Vielzahl der wabenförmig gebrannten Körpern mit einer dazwischenliegenden Haftschichtpaste miteinander verbunden sind; und
Verfestigen der Haftschichtpaste zur Bildung der Haftschicht.

12. Verfahren zur Herstellung eines Wabenstrukturkörpers gemäß Anspruch 11, wobei das Dichtungsmaterial für einen Wabenstrukturkörper als die Haftschichtpaste verwendet wird.

13. Verfahren zur Herstellung eines Wabenstrukturkörpers gemäß irgendeinem der Ansprüche 10 bis 12, wobei die anorganische Verbindung mindestens eine Alkalimetallverbindung und/oder Erdalkalimetallverbindung ist.

14. Verfahren zur Herstellung eines Wabenstrukturkörpers gemäß irgendeinem der Ansprüche 10 bis 13, wobei das metallhaltige Material mindestens ein Mitglied ist, das aus Kalziumcarbonat, Kalziumacetat, Magnesiumcarbonat, Magnesiumnitrat, Magnesiumsulfat und Magnesiumacetat ausgewählt ist.

15. Verfahren zur Herstellung eines Wabenstrukturkörpers gemäß Anspruch 14, wobei das metallhaltige Material Kalziumcarbonat oder Kalziumacetat ist.

16. Verfahren zur Herstellung eines Wabenstrukturkörpers gemäß Anspruch 15, wobei ein Kalziumgehalt in dem Dichtungsmaterial für einen Wabenstrukturkörper 0,01 bis 1,0 Gew.% ist.

**Revendications**

1. Matière d'étanchéité pour un corps structuré en nid d'abeilles, comprenant :

des fibres inorganiques comprenant un composé inorganique biosoluble ;
un sol d'oxyde ;
des particules inorganiques ; et
une matière, contenant un métal, qui contient au moins un élément sélectionné à partir du groupe constitué par le Mg, le Ca, et le Sr,
la matière d'étanchéité étant acide.

2. Matière d'étanchéité pour un corps structuré en nid d'abeilles selon la revendication 1,
dans laquelle
le composé inorganique biosoluble est au moins l'un d'un composé de métal alcalin et d'un composé de métal alcalino-terreux.

3. Matière d'étanchéité pour un corps structuré en nid d'abeilles selon la revendication 1 ou 2,
dans laquelle
la matière contenant un métal est au moins un élément sélectionné à partir du groupe constitué par le carbonate de calcium, l'acétate de calcium, le carbonate de magnésium, le nitrate de magnésium, le sulfate de magnésium et l'acétate de magnésium.

4. Matière d'étanchéité pour un corps structuré en nid d'abeilles selon la revendication 3,
dans laquelle
la matière contenant un métal est du carbonate de calcium ou de l'acétate de calcium.

5. Matière d'étanchéité pour un corps structuré en nid d'abeilles selon la revendication 4,
dans laquelle
une teneur en calcium dans la matière d'étanchéité pour un corps structuré en nid d'abeilles est de 0,01 % à 1,0 % en poids.

6. Corps structuré en nid d'abeilles comprenant :

un bloc céramique comprenant un corps cuit en nid d'abeilles dans lequel un grand nombre de cellules sont placées longitudinalement parallèlement les unes aux autres, une paroi cellulaire étant interposée entre ces dernières ; et

une couche de matière d'étanchéité périphérique formée sur une surface périphérique du bloc céramique, dans lequel

la couche de matière d'étanchéité périphérique est formée en solidifiant la matière d'étanchéité pour un corps structuré en nid d'abeilles selon l'une quelconque des revendications 1 à 5.

7. Corps structuré en nid d'abeilles selon la revendication 6,
dans lequel
le bloc céramique comprend une pluralité des corps cuits en nid d'abeilles, et
une couche adhésive formée entre des surfaces latérales de la pluralité des corps cuits en nid d'abeilles.

8. Corps structuré en nid d'abeilles selon la revendication 7,
dans lequel
la couche adhésive est formée d'un adhésif solidifié.

9. Corps structuré en nid d'abeilles selon la revendication 8,
dans lequel
l'adhésif est la matière d'étanchéité pour un corps structuré en nid d'abeilles selon l'une quelconque des revendications 1 à 5.

10. Procédé pour fabriquer un corps structuré en nid d'abeilles,
le corps structuré en nid d'abeilles comprenant :

un bloc céramique comprenant un corps cuit en nid d'abeilles dans lequel un grand nombre de cellules sont placées longitudinalement parallèlement les unes aux autres, une paroi cellulaire étant interposée entre celles - ci; et

une couche de matière d'étanchéité périphérique formée sur une surface périphérique du bloc céramique,

le procédé comprenant :

la préparation d'une matière d'étanchéité pour un corps structuré en nid d'abeille contenant des fibres inorganiques comprenant un composé inorganique biosoluble, un sol d'oxyde, des particules inorganiques, et une matière, contenant un métal, qui contient au moins un élément sélectionné à partir du groupe constitué par du Mg, du Ca et du Sr, la matière d'étanchéité pour un corps structuré en nid d'abeilles étant acide ; et

la formation de la couche de matière d'étanchéité périphérique en formant une couche de pâte de matière d'étanchéité périphérique comprenant la matière d'étanchéité pour un corps structuré en nid d'abeilles sur une surface périphérique du bloc céramique et la solidification de la couche de pâte de matière d'étanchéité périphérique.

11. Procédé pour fabriquer un corps structuré en nid d'abeilles selon la revendication 10, comprenant en outre un collage pour construire le bloc céramique, le bloc céramique comprenant une pluralité des corps cuits nid d'abeilles qui sont collés les uns aux autres, une couche adhésive étant interposée entre ceux - ci,
le collage incluant :

la préparation d'un corps agrégé en nid d'abeilles dans lequel une pluralité des corps cuits en nid d'abeilles sont collés les uns aux autres, une pâte de couche adhésive étant interposée entre ces derniers ; et
la solidification de la pâte de couche adhésive pour former la couche adhésive.

12. Procédé pour fabriquer un corps structuré en nid d'abeilles selon la revendication 11,
dans lequel
la matière d'étanchéité pour un corps structuré en nid d'abeilles est utilisée en tant que pâte de couche adhésive.

13. Procédé pour fabriquer un corps structuré en nid d'abeilles selon l'une quelconque des revendications 10 à 12,
dans lequel
le composé inorganique est au moins l'un d'un composé de métal alcalin et d'un composé de métal alcalino-terreux.

**14.** Procédé pour fabriquer un corps structuré en nid d'abeilles selon l'une quelconque des revendications 10 à 13, dans lequel
la matière contenant un métal est au moins un élément sélectionné à partir du groupe constitué par le carbonate de calcium, l'acétate de calcium, le carbonate de magnésium, le nitrate de magnésium, le sulfate de magnésium et l'acétate de magnésium.

**15.** Procédé pour fabriquer un corps structuré en nid d'abeilles selon la revendication 14, dans lequel
la matière contenant un métal est du carbonate de calcium ou de l'acétate de calcium.

**16.** Procédé pour fabriquer un corps structuré en nid d'abeilles selon la revendication 15, dans lequel
une teneur en calcium dans la matière d'étanchéité pour un corps structuré en nid d'abeilles est de 0,01 % à 1,0 % en poids.

Fig. 1

Fig. 2

(a)

(b)

A — A line cross-sectional view

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05110578 A1
- EP 1977789 A